(19) Europäisches Patentamt
European Patent Office
Office européen des brevets

(11) EP 2 488 578 B1

(12) EUROPÄISCHE PATENTSCHRIFT

(45) Veröffentlichungstag und Bekanntmachung des Hinweises auf die Patenterteilung:
**30.04.2014 Patentblatt 2014/18**

(21) Anmeldenummer: **10763645.8**

(22) Anmeldetag: **24.09.2010**

(51) Int Cl.:
***C08K 3/26*** (2006.01) ***C08K 5/00*** (2006.01)
***C08K 9/02*** (2006.01) ***C09C 3/06*** (2006.01)
***C08L 27/06*** (2006.01)

(86) Internationale Anmeldenummer:
**PCT/EP2010/064133**

(87) Internationale Veröffentlichungsnummer:
**WO 2011/045168 (21.04.2011 Gazette 2011/16)**

# (54) STABILISATOR-KOMBINATIONEN FÜR HALOGENHALTIGE POLYMERE

STABILISER COMBINATIONS FOR HALOGENATED POLYMERS

COMBINAISONS DE STABILISANTS POUR POLYMÈRES HALOGÉNÉS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.10.2009 DE 102009045701**

(43) Veröffentlichungstag der Anmeldung:
**22.08.2012 Patentblatt 2012/34**

(73) Patentinhaber: **IKA Innovative Kunststoffaufbereitung GmbH&Co. KG**
**06766 Wolfen (DE)**

(72) Erfinder: **REITH, Walter**
**82281 Egenhofen (DE)**

(74) Vertreter: **Büchel, Edwin**
**Isenbruck Bösl Hörschler LLP**
**Patentanwälte**
**Eastsite One**
**Seckenheimer Landstraße 4**
**68163 Mannheim (DE)**

(56) Entgegenhaltungen:
**EP-A1- 0 945 483**
**EP-A1- 2 072 567**
**EP-A1- 2 110 405**
**EP-A2- 0 457 471**
**WO-A1-02/092686**
**WO-A1-02/094919**
**WO-A1-2004/048453**
**WO-A1-2005/059027**
**US-A1- 2006 014 874**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 488 578 B1

## Beschreibung

Die Erfindung betrifft ein Stabilisatorsystem enthaltend einen Thermostabilisator und einen geträgerten zumindest teilweise kalzinierten Dolomit. Die Erfindung betrifft weiterhin Zusammensetzungen und Gegenstände das Stabilisatorsystem enthaltend, deren Verwendung und Verfahren zur Herstellung des geträgerten Dolomits.

Die Erfindung ist vielseitig einsetzbar und dient vor allem bei normalen Verarbeitungstemperaturen der Performance-Verbesserung von Metallstabilisatoren, wie Kalzium-Zink-, Barium-Zink-, Organozinn- und Bleistabilisatoren. Aber auch gänzlich schwermetallfreie, sogenannte organisch-basierte Stabilisatoren, bevorzugt Stabilisatoren auf Enaminon-Basis können in ihrem Wirkprofil optimiert werden. Außerdem ermöglicht die Erfindung eine Verbesserung der Langzeitstabilität von Kraftfahrzeugkomponenten aus Polyvinylchlorid bei mäßig erhöhten Temperaturen, insbesondere dann, wenn die Anwendung in Kombination mit Polyurethanharzen erfolgt.

Das Problem Polyvinylchlorid bei solchen Temperaturen ausreichend zu stabilisieren, bei denen das Polymer weich oder flüssig genug ist, um eine Formgebung zu ermöglichen, wurde bisher durch den Zusatz verschiedener Kombinationen von Thermostabilisatoren ausreichend gelöst. Bei den Verarbeitungstemperaturen kann aber das Harz unter autokatalytischer Freisetzung von Chlorwasserstoff abgebaut werden, und sich verfärben, verspröden oder an Maschinenteilen anhaften. Diese Probleme wurden bisher gelöst, indem vor oder während der Verarbeitung ein oder mehrere Thermostabilisatoren dem Polymeren zugesetzt werden. Bei diesen handelt es sich um Kalzium-Zink-, Barium-Zink- Organozinn-, Blei- und/oder organisch-basierten Stabilisatoren.

Obwohl die bisherigen Thermostabilisatoren bei erhöhten Verarbeitungstemperaturen eine ausreichende Stabilisierung des Polymeren ermöglichen, können sie bei niedrigeren Temperaturen, über einen längeren Zeitraum hinweg dem Polymeren aus dem der Fertigartikel besteht, keine ausreichende Stabilisierung verleihen. Beispielsweise ist der Schutz vor Verfärbung bei niedrigeren Temperaturen über lange Zeiträume ein spezielles Problem bei Kraftfahrzeug-Bauteilen, die aus Polyvinylchlorid geformt sind, obwohl diesem vor oder während der Verarbeitung Thermostabilisatoren zugesetzt wurden. Je nach Positionierung im Fahrzeug können diese Formteile während der Gebrauchszeit wechselnden Lichteinstrahlungen und erhöhten Temperaturen (höher als Normaltemperatur) ausgesetzt sein; dieses Phänomen kann die Eigenschaften von Kraftfahrzeug-Bauteilen in unterschiedlichem Maße beeinträchtigen. Bei Formteilen aus Polyvinylchlorid, die mit Polyurethan hinterschäumt sind, wie z.B. bei Autoarmaturenbrettem, Handschuhfächern, Türgriffen, Armlehnen und Kopfstützen, kann die Amin-Komponente aus dem Polyurethan zusätzlich zur Verfärbung und Beeinträchtigung der Gebrauchseigenschaften der Polyvinylchlorid-Formteile beitragen.

So wurden Stabilisatoren vorgeschlagen, die dem mit Polyurethan hinterschäumten Polyvinylchlorid-Formteil Stabilität bei mäßiger Hitze über längere Zeiträume hinweg oder gegenüber einem Amin aus dem Polyurethan verleihen.

Beispielsweise sind in EP-A 212 559 Kombinationen aus sterisch gehinderten Aminen (HALS-Verbindungen) und Ammonium-, Amin- oder Metallperchlorat offenbart, die dem Polyvinylchlorid-Harz gewisse Stabilität verleihen. Diese Publikation beschreibt ferner die Verwendung solcher Zusammensetzungen zur Stabilisierung von mit Polyurethan hinterschäumten Polyvinylchlorid-Formteilen.

US-A 4,861,816 offenbart Polyvinylchlorid-Zusammensetzungen, die ein Stabilisatorgemisch aus bestimmten Barium-/Zink-Karbonsäuresalzen und einem Hydrotalzit-Perchlorat enthalten. Laut Patentschrift ergibt der Einsatz dieser Hydrotalzit-Verbindung eine gute Aminbeständigkeit, insbesonders auch bei PVC-Formteilen, die mit Polyurethan hinterschäumt sind.

Viele Perchloratsalze sind jedoch in der Handhabung problematisch, da sie explosionsgefährlich sind oder starke Oxidationsmitel darstellen. Von gravierendem Nachteil sind jedoch bei der Verarbeitung die hohen Schmelzpunkte und die mangelhafte Dispergierbarkeit im Polymeren. Auch ist ihre Unverträglichkeit mit anderen Additiven zu erwähnen.

Zwar wurden in den letzten Jahren mehrfach Anstrengungen unternommen, die Polymerverträglichkeit und die Dispergierbarkeit im Polymeren zu verbessern, jedoch mit nicht voll befriedigenden Resultaten.

So beschreibt EP-A 457 471 eine Kombination aus primärem Thermostabilisator und einem sekundärem Thermostabilisator, umfassend mit Natriumperchlorat-Monohydrat-Lösung geträgertes Kalziumsilikat.

EP-A 768 336 beschreibt Perchlorat-Salze in Kombination mit 6-Aminourazil, wobei die Perchloratsalze auch auf Zeolithen oder Hydrotalziten geträgert sein können. WO-A 02/092686 offenbart zinkfreie Zeolith- und Hydrotalzit-Perchlorat-Kombinationen mit Antioxidantien, (Erd)Alkali-Karboxylaten, 1,3-Diketonen und Dihydropyridin-Verbindungen(DHP), wobei der Beschreibung zu entnehmen ist, daß es sich hierbei um Perchlorat-geträgerte Zeolithe und Hydrotalzite handelt.

DE-A 101 24 734 beschreibt Perchlorat-geträgertes Kalziumhydroxid als Stabilisator für PVC, wobei dieses beispielhaft aus wäßriger Natriumperchlorat-Lösung und Kalziumoxid erstellt wird.

DE-A 102 55 155 beschreibt Perchlorat-geträgerte Kalzium-Aluminium-Hydroxo-Hydrogenphosphite als Stabilisatoren für PVC, wobei für die Herstellung keine beispielhafte Belegung vorliegt.

WO-A 2008/061664 beschreibt Kalzium-karbonato-hydroxo-dialuminat-Kombinationen mit Perchlorat-Salzen, wobei die Beschreibung offenbart, daß auch mit Natriumperchlorat geträgerte Produkte vorliegen können.

Der gleiche Sachverhalt gilt auch für WO-A 2008/061665, wobei eine Perchlorat-Trägerung von zinkhaltigen

Kalzium-Aluminium-Doppelsalzen offenbart wird.

Die letzten sechs benannten Publikationen haben gemein, dass eine Trägerung von Metall-Perchlorat-Salzen auf anorganische Trägersubstanzen beschrieben wird.

Die nicht vorveröffentlichte europäische Patentanmeldung mit der Anmeldenummer EP 09 157 705.6 offenbart wässrige Natrium-Perchlorat-Lösungen geträgert auf kalzinierten Dolomit, wobei dieses Produkt als Stabilisatorkomponente in Kombinationen mit Enaminonen, tert.-Alkanolaminen oder Harnstoffen bzw. bestimmten Erdalkali-alumohydroxocarbonaten offenbart wird.

Alle vorgenannten Vorschläge sind jedoch in ihrer Wirkungsweise nicht voll befriedigend.

Demzufolge ist eine Aufgabe der vorliegenden Erfindung, eine verbesserte Perchloratsalz-Stabilisatorzusammensetzung bereitzustellen, mit dem Schwerpunkt, die Performance von primären Thermostabilisatoren wie Metallstabilisatoren, nämlich beispielsweise Kalzium-Zink-, Barium-Zink-, Organozinn- und Bleistabilisatoren, aber auch von gänzlich schwermtallfreien, sogenannten organisch-basierten Stabilisatoren, bevorzugt Stabilisatoren auf Enaminon-Basis bei normalen Verarbeitungstemperaturen zu steigern und außerdem die Stabilisierung von PVC-Harz-Zusammensetzungen zu verbessern, insbesondere dann, wenn diese mit Polyurethanen in Kontakt stehen um den Abbau des Polymeren bei über lange Zeit einwirkenden mäßigen Temperaturen zu retardieren.

Die Aufgabe wird gelöst durch ein Stabilisatorsystem enthaltend einen Thermostabilisator und einen geträgerten zumindest teilweise kalzinierten Dolomit der Formel:

$$Mt^1X^1{}_*CaX^2$$

mit

$Mt^1$ = Mg oder Zn;
$X^1$ = O oder $(OH)_2$;
$X^2$ = O; $(OH)_2$ oder $CO_3$,

wobei der calzinierte Dolomit mit einem Metallperchlorat der Formel

$$Mt^2(ClO_4)_{m*}nH_2O$$

mit $Mt^2$ = Li, Na, K, Mg, Ca, Ba, Zn , Al, La, Ce;
m = 1, 2 oder 3, wobei m derart ausgewählt ist, dass die Ladung des Metallions $Mt^2$ kompensiert ist;
n = 0-3
geträgert ist und wobei das Stabilisatorsystem keine der Verbindungen ausgewählt aus der Gruppe bestehend aus **(B)** und **(C)** enthält, wenn $Mt^1$ Mg ist und wobei

**(B)** mindestens eine stickstoffhaltige organische Verbindung ausgewählt aus der Gruppe bestehend aus **(B1)** und **(B2)** ist, wobei **(B1)** ein tert. Alkanolamin und **(B2)** ein Enaminon oder ein Harnstoff ist und

(C) ein Erdalkali-alumohydroxocarbonat der Formel **(C)**

$$(M_{1-x}Zn_x)_yAl_2(OH)_{4+2y}\,CO_{3*}zH_2O \qquad (C)$$

mit M = Magnesium oder/und Calcium; x = 0 bis 0,5; y = 2 bis 8 und z = 0 bis 12 ist.

Die Verbindungen (B) und (C) in Kombination mit Mg-Ca-Dolomiten ist in der nicht vorveröffentlichten europäischen Patentanmeldung mit der Anmeldenummer EP 09 157 705.6 beschrieben.

Die Erfindung umfasst eine Zusammensetzung aus einem (primären) Thermostabilisator, um typischerweise Stabilität bei Verarbeitungstemperaturen von 150 bis 205 °C zu bieten und üblicherweise 0,1 bis 10 Gew.-Teile bezogen auf das Harz und eines sekundären Stabilisators, der aus einer Mischung einer wäßrigen Metall-Perchlorat-Salz-Lösung und einem kalzinierten Dolomit besteht, um dem PVC zusätzlich verbesserte Langzeit-Thermostabilität zu verleihen .

Die Kombination von wäßriger Metall-Perchlorat-Salz-Lösung mit katziniertem Dolomit liefert ein Produkt, das in der Handhabung sicherer ist. So ist dieses nicht mehr schlag- oder stossempfindlich und nicht mehr explosionsgefährich beim Erhitzen. Ferner wirkt es nicht mehr als Oxidationsmittel. Weiter wurde gefunden, daß eine Kombination wäßriger Metall-Perchlorat-Salz-Lösungen mit kalziniertem Dolomit, der zusätzlich ein nicht-absorbierendes Verdünner-Pulver, wie z.B. Kalziumkarbonat, enthält, eine frei fließende Pulverzusammensetzung ergibt.

Die Metall-Perchlorat-Salze entsprechenden der allgemeinen Formel **(I):**

$$Mt(ClO_4)_m * nH_2O \quad \textbf{(I)}$$

mit Mt = $Mt^{(+)}$, $Mt^{(2+)}$, $Mt^{(3+)}$ und m = 1, 2, 3; n = 0 - 3
wobei $Mt^{(+)}$ = Li, Na, K; $Mt^{(2+)}$ = Mg, Ca, Ba, Zn; $Mt^{(3+)}$ = Al, La, Ce ist.

Bevorzugt ist $NaClO_4 * H_2O$ (Natriumperchlorat-Monohydrat).

Zumindest teilweise kalzinierte Dolomite entsprechen der allgemeinen Formel **(II):**

$$MtX_1*CaX_2 \quad \textbf{(II)}$$

mit Mt = Mg oder/und Zn und $X_1$ oder $X_2$ = O bzw. $(OH)_2$ und $X_2$ außerdem $CO_3$

Das Doppelsalz MgO*CaO entspricht dem normalen (vollständig) kalzinierten Magnesium-Dolomit. ZnO*CaO entspricht kalziniertem Zink-Dolomit (Minrecordit). MgO*CaO wird auch als voll-kalzinierter Dolomit, $MgO*CaCO_3$ als teil-kalzinierter Dolomit bezeichnet. $Mg(OH)_2*Ca(OH)_2$ ist das Hydratisierungsprodukt von vollkalziniertem Magnesium-Dolomit MgO*CaO.

Kalzinierte Magnesium-Dolomite sind bevorzugt, wobei MgO*CaO ganz besonders bevorzugt ist.

Die Herstellung von voll- und teil-kalzinierten Magnesium-Dolomiten ist in EP-A 2 072 567 beschrieben. Darin sind auch Produkteigenschaften publiziert.

Die Kombination aus wäßriger Metall-Perchlorat-Salz-Lösung und kalzinierten Dolomit der vorliegenden Erfindung umfassen im allgemeinen 1 bis 60 Gew.-%, vorzugsweise, weiter bevorzugt 10 bis 60 Gew.-%, weiter bevorzugt 10 bis 30 Gew.-% einer vorzugsweise 5 bis 80 Gew.-%, mehr bevorzugt 15-80 Gew.-%, weiter mehr bevorzugt 30-80 Gew.-%, weiter mehr bevorzugt 45-80 Gew.-%, weiter mehr bevorzugt 60- bis 75 Gew.-%-igen wäßrigen Lösung von Metallperchlorat-Hydrat bevorzugt von Natriumperchlorat-Monohydrat und 40 bis 90 Gew.-%, bevorzugt 70 bis 90 Gew.-%, kalzinierten Dolomit. Besonders bevorzugt umfassen die Zusammensetzungen von Natriumperchlorat mit kalziniertem Dolomit 15 bis 25 % einer 60 bis 75 Gew.-%igen wäßrigen Lösung von Natriumperchlorat-Monohydrat und 75 bis 85 Gew.-% kalzinierten Dolomit. Frei fließende Pulverzusammensetzungen werden hergestellt, indem 15 Gew.-% einer 60- bis 75-%igen wäßrigen Lösung von Natriumperchlorat-Monohydrat, 40 % kalzinierten Dolomit sowie 45 % Kalziumkarbonat kombiniert werden.

Es ist daher bevorzugt, dass der Metallperchlorat-Gehalt der wässrigen Lösung 5 bis 80 Gew.-%, mehr bevorzugt 15-80 Gew.-%, weiter mehr bevorzugt 30-80 Gew.-%, weiter mehr bevorzugt 45-80 Gew.-%, weiter mehr bevorzugt 60- bis 75 Gew.-% beträgt.

Es ist daher bevorzugt, dass der Anteil der Metallperchloratlösung 1 bis 60 Gew.-%, weiter bevorzugt 10 bis 60 Gew.-%, weiter bevorzugt 10 bis 30 Gew.-% bezogen auf das Gesamtgewicht des geträgerten Dolomits beträgt.

Vorzugsweise beträgt der Anteil des geträgerten kalzinierten Dolomites 0,001 bis 30 Gew.-%, mehr bevorzugt 0,001 bis 15 Gew.-%, weiter mehr bevorzugt 0,01 bis 5 Gew.-%, bezogen auf die Gesamtmenge des Stabilisatorsystems

Dementsprechend ist ein weiterer Gegenstand der vorliegenden Anmeldung ein Verfahren Verfahren zum Herstellen eines kalzinierten geträgerten Dolomits wie oben definiert, die Schritte enthaltend

(a) Bereitstellen eines zumindest teilweise kalzinierten Dolomits der Formel

$$Mt^1X^1*CaX^2$$

mit

$Mt^1$ = Mg oder Zn;
$X^1$ = O oder $(OH)_2$;
$X^2$ = O; $(OH)_2$ oder $CO_3$;

(b) Trägem des Dolomits mit einer wässrigen Metallperchloratlösung, wobei das Metallperchlorat die Formel

$$Mt^2(ClO_4)_m*nH_2O$$

mit

$Mt^2$ = Li, Na, K, Mg, Ca, Ba, Zn , Al, La, Ce;
m = 1, 2 oder 3, wobei m derart ausgewählt ist, dass die Ladung des Metallions $Mt^2$ kompensiert ist;
n = 0-3

(c) gegebenenfalls Trocknen des geträgerten Dolomits.

Vorzugsweise beträgt der Metallperchlorat-Gehalt der wässrigen Lösung 60 bis 75 Gew.-%.

Vorzugsweise beträgt der Anteil der Metallperchloratlösung 10 bis 60 Gew.-%, vorzugsweise 10 bis 30 Gew.-% bezogen auf das Gesamtgewicht des geträgerten Dolomits beträgt.

Die aus wässriger Metall-Perchlorat-Salz-Lösung und kalzinierten Dolomit erhaltene Stabilisatorzusammensetzung ist beispielsweise zugänglich durch Mischen einer Lösung von bevorzugt Natriumperchlorat in Wasser (beispielsweise etwa 60 Gew.-% Natriumperchlorat oder mehr), wie sie z.B. von ARKEMA im Handel erhältlich ist, mit kalzinierten Dolomit, z.B. CeM-iX_115, ex BENE_FIT Systems GmbH & Co. KG, Hirschau, DE.

Es wurde festgestellt, dass kalzinierter Dolomit in Kombination mit der Natriumperchloratlösung im Vergleich zur Verwendung von Natriumperchlorat alleine, nicht nur für Langzeit-Thermostabilität sorgt, sondern auch in der Lage ist, das Wasser in der Natriumperchloratlösung zu absorbieren und eine Natriumperchlorat-StabilisatorZusammensetzung zu ergeben, die relativ einfach zu handhaben ist und weniger Gefahren in sich birgt.

Das Mischen von Perchlorat-Salz-Lösungen mit kalziniertem Dolomit im technischen Maßstab kann durch Sprühgranulierung erfolgen. Die Sprühagglomerierung wird gemäß der dem Fachmann bekannten Methoden durchgeführt und kann entweder im Sprühtrockner, Sprühgranulator (Topspray oder Bottomspray, Gegenstromverfahren), Wirbelschichtgranulator oder in einem Mischer bzw. Horizontaltrockner erfolgen, wobei das Wasser der Perchlorat-Salz-Lösung so lange entfernt wird, bis ein Produkt mit gewünschter Restfeuchte erhalten wird. Diese kann durch dem Fachmann bekannte Methoden eingestellt werden. Dabei sind insbesondere die Parameter Temperatur und Luftstrommenge zur Herstellung des Granulates zu nennen. Einzelheiten zum Verfahren der Sprühagglomerierung können beispielsweise dem Kapitel von Hans Mollet, Arnold Grubenmann, Formulation Technology - Emulsions, Suspensions, Solid Forms, Wiley-VCH 2001, Kapitel 6.2, Seiten 190 bis 226, entnommen werden.

Die Sprühagglomerierung findet vorzugsweise in einem Reaktor statt, in dem das Trägermaterial (kalzinierter Dolomit) mit Perchlorat-Salz-Lösung als Suspension eingesprüht wird, wobei eine Beschichtung des Trägermaterials unter Hydratisierung der Oxide zu Hydroxiden stattfindet. Der Luftstrom ermöglicht eine rasche Trocknung des beschichteten Materials mit nachträglicher Agglomeration der Primärpartikel. Dieses Verfahren arbeitet sehr schonend, da das Produkt unter milden Bedingungen gebildet wird.

Die Sprühtrocknung kann ebenfalls aus einer wässrigen Suspension erfolgen, wobei die Mischung aus kalziniertem Dolomit und Perchlorat-Salz-Lösung als Slurry vorzugsweise in einem Topspray-Granulator versprüht wird.

Die Temperatur im Reaktor ist bei der Sprühagglomeration vorzugsweise konstant und liegt im Bereich von 20°C bis 120°C, vorzugsweise 40°C bis 70 °C bei einer Zulufttemperatur, die dann typischerweise im Bereich von 70°C bis 170°C, vorzugsweise im Bereich von 90°C bis 120 °C liegt.

In der Praxis werden - wie bereits erwähnt - die Zusammensetzungen aus Natriumperchlorat und kalziniertem Dolomit - in Kombination mit primären Thermostabilisatoren eingesetzt. Die Menge der in der vorliegenden Erfindung verwendeten Zusammensetzung von Natriumperchlorat und kalziniertem Dolomit beträgt insbesondere 0,5 bis 5 Gewichtsteile, bezogen auf das Gewicht des halogenhaltigen Polymers, wie eines Polyvinylchlorid-Harzes.

Zu den primären Thermostabilisatoren sind Zinn-Stabilisatoren, wie Organozinnmerkaptide, Organozinnsulfide und Organozinnkarboxylate und deren Gemische, Bleisalze, Metallsalz-Stabilisatoren, wie Kalziumsalze, Magnesiumsalze, Bariumsalze, Zinksalze und deren Gemische. Diese Stabilisatoren werden normalerweise in einer Menge von 0,01 bis 10 Gew.-% des Harzes eingesetzt, bevorzugt in einer Menge von 0,1 bis 5 Gew.-%.

**Zinnstabilisatoren**

Beispiele für geeignete Organozinn-Stabilisatoren sind u.a. Alkylzinnmerkaptide, wie z.B. Monomethylzinn-tris(isooktylthioglykolat), Dimethylzinn-bis(isooktylthioglykolat), Monomethylzinn-tris-(2-ethylhexylthioglykolat), Dimethylzinn-bis-(2-ethylhexylthioglykolat), Monobutylzinn-tris(isooktylthioglykolat), Dibutylzinn-bis(isooktylthioglykolat), Monobutylzinn-tris-(2-ethylhexylthioglykolat), Dibutylzinn-bis-(2-ethylhexylthioglykolat), Monomethylzinn-tris(merkaptoethyltallat), Dimethylzinn-bis-(merkaptoethyltallat), Dibutylzinn-bis(merkaptoethyltallat), Monobutylzinn-tris-(merkaptoethylaurat), Dibutylzinn-bis(merkaptoethyllaurat), Monomethylzinn-bis-(isooktyll-3-merkaptopropionat), Dimethylzinn-bis(isooktyl-3-merkaptopropionat), Monobutylzinn-tris-(isooktyl-3-merkaptopropionat) und Dibutylzinn-bis(isooktyl-3-merkaptopropionat); Alkylzinnsulfide, wie z.B. Monomethylzinnsulfid, Dimethylzinnsulfid, Monobutylzinnsulfid und Dibutylzinnsulfid; Alkylzinnkarboxylate, wie z.B. Dimethylzinndilaurat, Dibutylzinndilaurat, Dibutylzinndioktanoat, Dibutylzinndodekanoat, Dibutylzinnneodekanoat, Dibutylzinndilaurat, Dibutylzinnditallat, Dioktylzinnmaleat und Dibutylzinn-bis(dodezylmaleat); sowie Gemische davon und Laurylzinn- und Esterzinnstabilisatoren.

**Bleistabilisatoren**

Als bleihaltige Stabilisatoren eignen sich im Rahmen der vorliegenden Erfindung grundsätzlich alle organischen oder anorganischen Bleiverbindungen. Besonders geeignet sind beispielsweise basische Bleisalze von anorganischen Säuren wie dreibasisches Bleisulfat, vierbasisches Bleisulfat, zweibasisches Bleiphosphit oder zweibasisches Bleiphosphit-sulfit oder Bleikarbonat (Bleiweiss), Bleisalze von linearen oder verzweigten, gesättigten oder ungesättigten, aliphatischen oder araliphatischen oder aromatischen organischen Monokarbonsäuren, wie Essigsäure, Propionsäure, Buttersäure, Valeriansäure, Hexansäure, Önanthsäure, Oktansäure, Neodekansäure, 2-Ethylhexansäure, Pelargonsäure, Dekansäure, Undekansäure, Dodekansäure (Laurinsäure), Tridekansäure, Myristinsäure, Palmitinsäure, 3,6-Dioxaheptansäure, 3,6,9-Trioxadekansäure, Behensäure, Benzoesäure, p-tert-Butylbenzoesäure, Iso-Stearinsäure, Stearinsäure, 12-Hydroxystearinsäure, 9,10-Dihydroxystearinsäure, Ölsäure, Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salizylsäure, p-tert-Oktylsalizylsäure, Sorbinsäure, Zimtsäure, Acrylsäure, Methacrylsäure, Harzsäure (Abietinsäure); Dikarbonsäuren bzw. deren Monoester oder Hydroxykarbonsäuren, wie Oxalsäure, Malonsäure, Maleinsäure, Fumarsäure, Weinsäure, Mandelsäure, Äpfelsäure, Glykolsäure, Polyglykoldikarbonsäuren mit einem Polymerisationsgrad von etwa 10 bis etwa 12, Phthalsäure, Isophthalsäure, Terephthalsäure oder Hydroxyphthalsäure; Tri- oder Tetrakarbonsäuren bzw. deren Mono-, Di- oder Triester, wie Hemimellithsäure, Trimellithsäure, Pyromellithsäure oder Zitronensäure, oder dimerisierte bzw. trimerisierte Linolsäure. Ebenfalls geeignet sind zykloaliphatische Karbonsäuren wie Zyklohexankarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Besonders geeignet sind dabei neutrales oder basisches Bleistearat, Bleiweiß, 3- oder 4-basisches Bleisulfat, 2-basisches Bleiphosphit, 2-basisches Bleiphthalat oder 4-basisches Bleifumarat. Ganz besonders bevorzugt sind 2-basisches Bleiphosphit und 3-basisches Bleisulfat.

Ebenfalls als Bleiverbindungen zur Stabilisierung geeignet sind Produkte, die durch Umsetzung von Bleioxid mit Hydroxykarbonsäuren beispielsweise Dimethylolpropionsäure erhältlich sind. Derartige Verbindungen und ihre Herstellung werden in EP-A 313 113 beschrieben.

Bevorzugt sind Bleiphosphit oder -sulfat oder ihre Mischungen mit mindestens einer organischen Bleiverbindung, insbesondere mit einem Bleikarboxylat, bevorzugt Bleistearat oder Bleioleat. Ganz besonders bevorzugt sind 2-basisches Bleiphosphit und 3-basisches Bleisulfat und deren Abmischungen mit Blei- oder Kalziumstearat bzw. deren Kombination mit Kalzium-Zink-Fettsäurekarboxylaten.

Der Gehalt eines erfindungsgemäßen Stabilisatorsystems an Bleistabilisatoren, beträgt vorzugsweise mindestens 5 Gew.-%, bevorzugt 10 bis 95 Gew.-%, besonders bevorzugt 20 bis 90 Gew.-%, und ganz besonders bevorzugt 30 bis 75 Gew.-%. Bei basischen Bleistabilisatoren variiert der Basenanteil bevorzugt von 1:1 bis 10:1.

Zu den Metallsalzstabilisatoren gehören Alkali- und Erdalkaliverbindungen, Metallseifen und Zinkverbindungen.

**Alkali- und Erdalkali-Verbindungen**

Darunter versteht man vornehmlich die Karboxylate der im Kapitel Zinkverbindungen beschriebenen Säuren, aber auch entsprechende Oxide bzw. Hydroxide oder Karbonate. Es kommen auch deren Gemische mit organischen Säuren in Frage. Beispiele sind LiOH, NaOH, KOH, CaO, $Ca(OH_2)$, MgO, $Mg(OH)_2$, $Sr(OH)_2$, $Al(OH)_3$, $CaCO_3$ und $MgCO_3$ (auch basische Karbonate, wie beispielsweise Magnesia Alba) und Huntit, sowie fettsaure Na- und K-Salze. Bei Erdalkali- und Zn-Karboxylaten können auch deren Addukte mit MO oder $M(OH)_2$ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali- und/oder Aluminium-Karboxylate eingesetzt.

Bevorzugt sind Magnesiumhydroxid, Mg-azetylazetonat, Ca-azetylazetonat sowie ungecoatetes und gecoatetes Kalziumhydroxid. Ganz besonders bevorzugt ist gecoatetes Kalziumhydroxid (Coating mit Fettsäuren z.B. Palmitin- und Stearinsäuren bzw. deren Gemischen).

**Metallseifen**

Metallseifen sind in der Hauptsache Metallkarboxylate, bevorzugt längerkettiger Karbonsäuren. Geläufige Beispiele sind Stearate und Laurate, auch Oleate und Salze kürzerkettiger aliphatischer oder aromatischer Karbonsäuren wie Essigsäure, Propionsäure, Buttersäure, Valeriansäure, Hexansäure, Sorbinsäure; Oxalsäure, Malonsäure, Bernsteinsäure, Glutarsäure, Adipinsäure, Fumarsäure, Zitronensäure, Benzoesäure, Salizylsäure, Phthalsäuren, Hemimellitsäure, Trimellitsäure, Pyromellitsäure.

Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Kalzium/Zink- oder Kalzium/Magnesium/Zink-Stabilisatoren. Die Metallseifen können einzeln oder in Mischungen eingesetzt werden. Eine Übersicht über gebräuchliche Metallseifen findet sich in Ullmanns Enzyklopedia of Industrial Chemistry, 5th Ed., Vol. A16 (1985), S. 361 ff.). Bevorzugt sind Magnesium-, Kalzium- und Zinkseifen.

Bevorzugt sind Magnesium-, Kalzium- und Zinkseifen. Ganz besonders bevorzugt ist Magnesium- und Kalziumlaurat bzw. -stearat sowie Zinklaurat und Zinkstearat.

**Zinkverbindungen:**

Bei den organischen Zinkverbindungen mit einer Zn-O-Bindung handelt es sich um Zinkenolate, Zinkphenolate oder/und Zinkkarboxylate. Letztere sind Verbindungen aus der Reihe der aliphatischen gesättigten und ungesättigten $C_1$-$_{22}$-Karboxylate, der aliphatischen gesättigten oder ungesättigten $C_{2-22}$-Karboxylate, die mit wenigstens einer OH-Gruppe substituiert sind oder deren Kette wenigstens durch ein oder mehrere O-Atome unterbrochen ist (Oxasäuren), der zyklischen und bizyklischen Karboxylate mit 5-22 C-Atomen, der unsubstituierten, mit wenigstens einer OH-Gruppe substituierten und/oder $C_1$-$_{16}$-alkylsubstituierten Phenylkarboxylate, der Phenyl-$C_{1-16}$-alkylkarboxylate, oder der gegebenenfalls mit $C_{1-12}$-alkylsubstituierten Phenolate, oder der Abietinsäure. Zn-S-Verbindungen sind beispielsweise Zn-Merkaptide, Zn-Merkaptokarboxylate und Zn-Merkaptokarbonsäureester.

Namentlich zu erwähnen sind, als Beispiele, die Zinksalze der monovalenten Karbonsäuren, wie Ameisensäure, Essigsäure, Propionsäure, Buttersäure, Valeriansäure, Hexansäure, Önanthsäure, Oktansäure, Neodekansäure, 2-Ethylhexansäure, Pelargonsäure, Dekansäure, Undekansäure, Dodekansäure, Tridekansäure, Myristinsäure, Palmitinsäure, Laurinsäure, Isostearinsäure, Stearinsäure, 12-Hydroxystearinsäure, 9,10-Dihydroxystearinsäure, Ölsäure, Rizinolsäure, 3,6-Dioxaheptansäure, 3,6,9-Trioxadekansäure, Behensäure, Benzoesäure, p-tert-Butylbenzoesäure, Dimethylhydroxybenzoesäure, 3,5-Di-tert-Butyl-4-hydroxybenzoesäure, Tolylsäure, Dimethylbenzoesäure, Ethylbenzoesäure, n-Propylbenzoesäure, Salizylsäure, p-tert-Oktylsalizylsäure, und Sorbinsäure, Zimtsäure, Mandelsäure, Glykolsäure; Zinksalze der divalenten Karbonsäuren bzw. deren Monoester, wie Oxalsäure, Malonsäure, Bernsteinsäure, Glutarsäure, Adipinsäure, Fumarsäure, Pentan-1,5-dikarbonsäure, Hexan-1,6-dikarbonsäure, Heptan-1 ,7-dikarbonsäure, Oktan-1 ,8-dikarbonsäure, 3,6,9-Trioxadekan-1,10-dikarbonsäure, Milchsäure, Malonsäure, Maleinsäure, Weinsäure, Äpfelsäure, Salizylsäure, Polyglykol-dikarbonsäure (n=10-12), Phthalsäure, Isophthalsäure, Terephthalsäure und Hydroxyphthalsäure; und der Di- oder Triester der tri-oder tetravalenten Karbonsäuren, wie Hemimellithsäure, Trimellithsäure, Pyromellithsäure, Zitronensäure sowie ferner sog. überbasische (overbased) Zinkkarboxylate oder Zinklaurylmerkaptid, Zinkthioglykolat, Zinkthiosalizylat, Zink-bisi-oktylthioglykolat, Zinkmerkaptopropionat, Zinkthiolactat, Zinkthiomalat, Zink-bisoktylmerkaptopropionat, Zink-bis-isooktylthiolaktat und Zink-bis-laurylthiomalat.

Bei den Zinkenolaten handelt es sich bevorzugt um Enolate des Azetyl(azetyl) azetons, des Benzoyl(azetyl)azetons, des Dibenzoylmethans sowie um Enolate der (Azetyl-)Azetessig- und Benzoyl(azet)essigesters sowie der Dehydrazetsäure. Ausserdem können auch anorganische Zinkverbindungen wie Zinkoxid, Zinkhydroxid, Zinkkarbonat, basisches Zinkkarbonat oder Zinksulfid zum Einsatz kommen.

Bevorzugt sind neutrale oder basische Zinkkarboxylate einer Karbonsäure mit 1 bis 22 C-Atomen (Zinkseifen), wie beispielsweise Benzoate oder Alkanoate, bevorzugt $C_8$-Alkanoate, Stearat, Oleat, Laurat, Palmitat, Behenat, Versatat, Hydroxystearate und -oleate, Dihydroxystearate, p-tert-Butylbenzoat, oder (Iso)oktanoat. Besonders bevorzugt sind Stearat, Oleat, Versatat, Benzoat, p-tert-Butylbenzoat und 2-Ethylhexanoat.

Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden.

Weitere Beispiele für Metallstabilisatoren sind Bariumdi(nonylphenolat), Bariumdi(nonyl-o-kresolat), Kalziumlaurat, Magnesiumlaurat Bariumlaurat, Kalziumrizinoleat, Magnesiumrizinoleat, Bariumrizinoleat, Kalziummyristat, Magnesiummyristat, Bariummyristat, Bariumbenzoat, Bariumoxalat, Bariummalonat, Bariummaleat, Bariumtartrat, Barium-p-tert-butylbenzoat, Bariumsuccinat, Bariumglutarat, Bariumadipat, Bariumpimelat, Bariumsuberat, Bariumazelat und Bariumsebazat, Zinklaurat, Zinkoxalat, Zinkmalonat, Zinkmaleat, Zinktartrat, Zinkbenzoat, Zink-p-tert-butylbenzoat, Zinksuccinat, Zinkadipat, Zinkmalat und Zinkstearat. Weiter können Gemische der obigen Substanzen und / oder anderer bekannter Metallsalz-Stabilisatoren verwendet werden. Beispielsweise erwiesen sich ein 99:1-Gemisch (bezogen auf das Gewicht) von Kalzium- oder Bariumbenzoat und Zinklaurat sowie ein 6:1-Gemisch (bezogen auf das Gewicht) von Kalzium- oder Bariumstearat und Zinklaurat als nützlich.

Neben den Thermostabilisatoren können auch Antioxidantien, wie z.B. phenolische Antioxidantien, zugesetzt werden, die normalerweise in einer Menge von 0,01 bis 10 Gew.-%, noch häufiger in einer Menge von 0,1 bis 5 Gew.-%, das Thermostabilisators eingesetzt werden. Außerdem können Epoxyverbindungen, wie z.B. epoxidiertes Sojabohnenöl, in Mengen von 0,01 bis 10 Gew.-% des Polymers verwendet werden.

Zusätzlich zu den bisher aufgeführten Metallstabilisatoren können noch weitere Metall-Stabilisatoren zugegen sein, nämlich: .

- Titanhaltige Hydrotalzite
- Lithiumschichtgitterverbindungen
- Kalzium-Aluminium-Hydroxo-Hydrogenphosphite
- Zeolithe
- Dawsonite
- Hydroxokarboxylat-Metallsalze

**Titanhaltige Hydrotalzite**

Titanhaltige Hydrotalzite sind in PS - WO-A 95/21127 beschrieben. Verbindungen dieser Art mit der allgemeinen Formel $Al_aMg_bTi_c(OH)_d(CO_3)_e * m\ H2O$, wobei a:b = 1:1 bis 1:10; $2 \leq b \leq 10$; $0<c<5$; $0 \leq m<5$ betragen und d und e so gewählt sind dass ein basisches, ladungsfreies Molekül entsteht, können ebenfalls mit verwendet werden.

**Lithium-Schichtgitterverbindungen** (Lithium-Hydrotalzite)

Lithium-Aluminium-Schichtgitterverbindungen haben die allgemeine Formel:

$$Li_aM^{II}_{(b-2a)}Al_{(2+a)}OH_{(4+2b)}(A^{n-})_{(2/n)} * m\ H_2O$$

worin

$M^{II}$ Mg, Ca oder Zn und
$A^n$ ein ausgewähltes Anion der Wertigkeit n oder ein Gemisch von Anionen ist und die Indizes im Bereich von $0 < a < (b-2)/2$,
$1<b<6$ und
m = 0 bis 30

liegen mit der Einschränkung, dass (b-2a) >2 ist oder
die allgemeine Formel:

$$[Al_2(Li_{(1-x)}\ .M^{II}_x)(OH)_6]_n(A^{n-})_{(1+x)} * m\ H_2O$$

worin

$M^{II}$, A, m und n die obige Bedeutung haben und
x die Bedingung erfüllt $0{,}01 \leq x < 1$

Das Anionen $A^n$ in der obigen allgemeinen Formel kann Sulfat, Sulfit, Sulfid, Thiosulfat, Peroxosulfat, Peroxodisulfat, Hydrogenphosphat, Hydrogenphosphit, Karbonat, Halogenid, Nitrat, Nitrit, Hydrogensulfat, Hydrogenkarbonat, Hydrogensulfit, Hydrogensulfid, Dihydrogenphosphat, Dihydrogenphosphit, Monokarbonsäureanionen wie Azetat und Benzoat, sowie Hydroxid, Azetylazetonat, Phenolat, Pseudohalogenid, Halogenit, Halogenat, Perhalogenat, $I_3^-$, Permanganat, Anionen von Dikarbonsäuren wie Phthalat, Oxalat, Maleat oder Fumarat, Bisphenolat, Phosphat, Pyrophosphat, Phosphit, Pyrophosphit und Anionen von Trikarbonsäuren wie Zitrat, Trisphenolat u.v.m., sowie Gemische daraus sein. Unter diesen sind Hydroxid, Karbonat, Phosphit und Maleat bevorzugt. Zur Verbesserung der Dispergierbarkeit der Substanzen in halogenhaltigen thermoplastischen Polymermassen können diesselben mit einer höheren Fettsäure, z.B. Stearinsäure, einem anionischen oberflächenaktiven Agens, einem Silankuppler, einem Titanat-Kuppler oder einem Glyzerinfettsäureester oberflächenbehandelt sein.

**Kalzium-Aluminium-Hydroxo-Hydrogenphosphite** (CHAP-Verbindungen)

Für die erfindungsgemässen Stabilisatorkombinationen geeignete Verbindungen aus der Gruppe der basischen Kalzium-Aluminium-Hydroxy-Hydrogenphosphite sind Verbindungen der allgemeinen Formel:

$$Ca_xAl_2(OH)_{2(x+2)}HPO_3 * H_2O,$$

wobei

x = 2 - 8 und
$Ca_xAl_2(OH)_{2(x+3-y)}(HPO_3)_y * mH_2O$,
wobei x = 2 - 12,

$$\frac{2x+5}{2} > y > 0$$

und m = 0 - 12 bedeuten, ausgenommen y = 1, wenn x = 2 - 8 ist.

Bei ihrer Anwendung als Stabilisatoren spalten die getrockneten Kalzium-Aluminium-Hydroxy-Phosphite bei den beispielsweise für Hart-PVC üblichen Verarbeitungstemperaturen von 160 - 200°C kein Wasser ab, so dass in den Formteilen keine störende Blasenbildung auftritt.

Zur Verbesserung ihrer Dispergierbarkeit in halogenhaltigen thermoplastischen Harzen können die Verbindungen in bekannter Weise mit oberflächenaktiven Mittel gecoated werden. Die Verbindungsklasse, auch CHAP- oder CAP-Verbindungen genannt, ist beschrieben in EP 0.506.831A1

Die oben beschriebenen Kalzium-Aluminium-Hydroxo-Hydrogenphosphite und titanhaltige Hydrotalzite können außer kristallin auch teilkristallin und/oder amorph vorliegen.

**Zeolithe** (Alkali bzw. Erdalkalialumosilikate)

Sie können durch die Formel $M_{x/n}[(AlO_2)_x(SiO_2)_y] * w\ H_2O$ beschrieben werden, worin n die Ladung des Kations M; M ein Element der ersten oder zweiten Hauptgruppe, wie Li, Na, K oder $NH_4$ sowie Mg, Ca, Sr oder Ba; y:x eine Zahl von 0,8 bis 15, bevorzugt von 0,8 bis 1,2; und w eine Zahl von 0 bis 300, bevorzugt von 0,5 bis 30, ist.

Beispiele für Zeolithe sind Natriumalumosilikate der Formeln

$Na_{12}Al_{12}Si_{12}O_{48}*27\ H_2O$ [Zeolith A], $Na_6Al_6Si_6O_{24}*2\ NaX*7,5\ H_2O$, X=OH, Halogen, $ClO_4$ [Sodalith]; $Na_6N_6Si_{30}O_{72} *\ 24\ H_2O$; $Na_8Al_8Si_{40}O_{96} *\ 24\ H_2O$; $Na_{16}Al_{16}Si_{24}O_{80} *\ 16\ H_2O$; $Na_{16}Al_{16}Si_{32}O_{96} *\ 16\ H_2O$; $Na_{56}Al_{56}Si_{136}O_{384} * 250\ H_2O$ [Zeolith Y], $Na_{86}Al_{86}Si_{106}O_{384} * 264\ H_2O$ [Zeolith X]; $Na_2O$, $Al_2O_3$, (2-5)$SiO_2$, (3,5-10)$H_2O$ [Zeolith P]; $Na_2O$, $Al_2O_3$, $2SiO_{2,} *$ (3,5-10) $H_2O$ (Zeolith MAP); oder die durch teilweisen bzw. vollständigen Austausch der Na-Atome durch Li-, K-, Mg-, Ca-, Sr- oder Zn-Atome darstellbaren Zeolithe wie $(Na,K)_{10}Al_{10}Si_{22}O_{64} *\ 20\ H_2O$; $Ca_{4,5}Na_3[(AlO_2)_{12}(SiO_2)_{12}] *\ 30\ H_2O$; $K_9Na_3[(AlO_2)_{12}(SiO_2)_{12}] *\ 27\ H_2O$. Ganz besonders bevorzugt sind Na-Zeolith A und Na-Zeolith MAP (siehe auch PS - US 6,531,533). Ebenso bevorzugt sind Zeolithe mit äußerst geringer Teilchengröße, insbesondere vom Na-A- und Na-P-Typ, wie sie auch in PS - US 6.096.820 beschrieben sind.

**Dawsonite** (Alkalialumokarbonate)

Diese werden durch die allgemeine Formel

$$M[Al(OH)_2CO_3](M = Na, K)$$

beschrieben. Die Herstellung von Na-Dawsonit (DASC bzw. SAC) und K-Dawsonite (DAPC) ist publiziert in PS - US 3.501.264 und US 4.221.771 sowie in PS - EP 0394.670 A1. Die Synthese kann hydrothermal oder nichthydrothermal erfolgen. Die Produkte können kristallin oder amorph vorliegen. Einbezogen in die Substanzklasse sind auch Natrium-Magnesium-Alumokarbonate (SMAC); deren Herstellung ist beschrieben PS - US 455.055.284.

Die Hydrotalzite und/oder Kalzium-Aluminium-Hydroxo-Hydrogenphosphite und/oder Zeolithe und/oder Dawsonite können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer, angewandt werden.

**Hydroxykarboxylat-Metallsalze**

Weiterhin können Hydroxykarboxylat-Metallsalze zugegen sein, wobei das Metall ein Alkali- oder Erdalkalimetall oder Aluminium sein kann. Bevorzugt sind Natrium, Kalium, Magnesium oder Kalzium. Die Hydroxykarbonsäure kann Glykol-, Milch-, Äpfel-, Wein- oder Zitronensäure oder Salizyl- bzw. 4-Hydroxybenzoesäure oder auch Glyzerin-, Glukon- und Zuckersäure (siehe z.B. PS - GB 1.694.873 sowie EP 1.303.564 A1) sein.

Weiterhin können andere Schichtgitterverbindungen wie Li-Hydrotalzit eingesetzt werden. Nähere Ausführungen hierzu sind zu finden in PS - EP 0.930.332 A1. Die Synthese von L-CAM-Perchlorat ist beispielweise beschrieben in PS - EP 0.761.756 A1.

Außerdem können metallfreie Costabilisatoren zusätzlich verwendet werden, nämlich:

- Glyzidylverbindungen
- Epoxidierte Fettsäureester
- Phenolverbindungen
- Phosphite
- Sterisch gehinderte Amine
- Polyole
- 1,3-Diketone

- Thiophosphite
- Merkaptokarbonsäureester

**Glyzidylverbindungen**

Sie enthalten die Glyzidylgruppe:

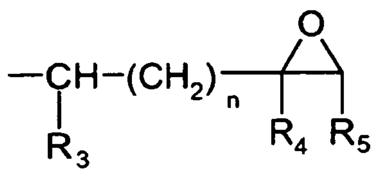

wobei diese direkt an Kohlenstoff, Sauerstoff-, Stickstoff- oder Schwefelatome gebunden ist, und worin entweder $R_3$ und $R_5$ beide Wasserstoff sind, $R_4$ Wasserstoff oder Methyl und n = 0 ist, oder worin $R_3$ und $R_5$ zusammen $-CH_2-CH_2$ oder $-CH_2$ $CH_2-CH_2$ bedeuten, $R_4$ dann Wasserstoff und n = 0 oder 1 ist.

I) Glyzidyl- und β-Methylglyzidylester erhältlich durch Umsetzung einer Verbindung mit mindestens einer Karboxylgruppe im Molekül und Epichlorhydrin bzw. Glyzerindichlorhydrin bzw. ß-Methyl-epichlorhydrin. Die Umsetzung erfolgt zweckmäßig in Gegenwart von Basen.

Als Verbindungen mit mindestens einer Karboxylgruppe im Molekül können aliphatische Karbonsäuren verwandt werden. Beispiele für diese Karbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Kapron-, Kapryl-, Laurin-, Myristin-, Palmitin-, Stearin- und Pelargonsäure, sowie die bei den organischen Zinkverbindungen erwähnten Säuren.

Es können aber auch zykloaliphatische Karbonsäuren eingesetzt werden, wie beispielsweise Zyklohexankarbonsäure, Tetrahydrophthalsäure, 4-Methyltetrahydrophthalsäure, Hexahydrophthalsäure oder 4-Methylhexahydrophthalsäure.

Weiterhin können aromatische Karbonsäuren Verwendung finden, wie beispielsweise Benzoesäure, Phthalsäure, Isophthalsäure, Trimellithsäure oder Pyromellithsäure.

Ebenfalls können auch karboxylterminierte Addukte, z. B. von Trimellithsäure und Polyolen, wie beispielsweise Glyzerin oder 2,2-Bis-(4-hydroxyzyklohexyl)-propan verwandt werden.

Weitere im Rahmen dieser Erfindung verwendbare Epoxidverbindungen finden sich in EP 0 506 617.

II) Glyzidyl- oder (β-Methylglyzidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glyzerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooktanol, 2-Ethylhexanol, Isodekanol sowie $C_7$-$C_9$-Alkanol- und $C_9$-$C_{11}$-Alkanolgemischen.

Sie leiten sich aber auch beispielsweise ab von zykloaliphatischen Alkoholen wie 1,3- oder 1,4-Dihydroxyzyklohexan, Bis-(4-hydroxyzyklohexyl)-methan, 2,2-Bis-(4-hydroxyzyklohexyl)-propan oder 1,1-Bis-(hydroxymethyl)-zyklohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkemigen Phenolen ableiten, wie beispielsweise von Phenol, Resorzin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glyzidyl-1-naphthylether, Glyzidyl-2-phenylphenylether, N-(2,3-epoxypropyl)-phthalimid und 2,3-Epoxypropyl-4-methoxyphenylether.

III) (N-Glyzidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglyzidyl-m-aminophenol oder N,N,O-Triglyzidyl-p-aminophenol.

Zu den (N-Glyzidyl)-Verbindungen zählen aber auch N,N'-Di-, N,N',N"-Tri- und N,N',N",N"'-Tetraglyzidylderivate

von Zykloalkylenhamstoffen, wie Ethylenharnstoff oder 1,3-Propylenharnstoff, und N,N'-Diglyzidylderivate von Hydantoinen, wie von 5,5-Dimethylhydantoin oder Glykoluril und Triglyzidylisozyanurat.

IV) S-Glyzidyl-Verbindungen, wie beispielsweise Di-S-Glyzidylderivate, die sich von Dithiolen, wie beispielsweise Ethan-1,2-dithiol oder Bis-(4-merkaptomethylphenyl)-ether ableiten.

V) Epoxidverbindungen mit einem Rest der obigen Formel, worin $R_1$ und $R_3$ zusammen $-CH_2-CH_2-$ bedeuten und n 0 ist, sind Bis-(2,3-epoxyzyklopentyl)-ether, 2,3-Epoxyzyklopentyl-Glyzidylether oder 1,2-Bis-(2,3-epoxyzyklopentyloxy)-ethan. Ein Epoxidharz mit einem Rest der obigen Formel, worin $R_1$ und $R_3$ zusammen-$CH_2-CH_2$- sind und n 1 bedeutet, ist beispielsweise 3,4-Epoxy-6-methyl-zyklohexankarbonsäure-(3',4'-epoxy-6'-methyl-zyklohexyl)-methylester.

Geeignete endständige Epoxide sind beispielsweise:

a) flüssige Bisphenol-A-diglyzidylether wie Araldit®GY 240, Araldit®GY 250, Araldit®GY 260, Araldit®GY 266, Araldit®GY 2600, Araldit®MY 790 und Epicote® 828 (BADGE);
b) feste Bisphenol-A-diglyzidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araidit®GT 6608, Araldit®GT 6609, Araldit®GT 6610 und Epikote® 1002;
c) flüssige Bisphenol-F-diglyzidylether wie Araldit®GY 281, Araldit®PY 302, Araldit®PY 306 (BFDGE);
d) feste Polyglyzidylether von Tetraphenylethan wie CG Epoxy Resin®0163;
e) feste und flüssige Polyglyzidylether von Phenolformaldehyd Novolak wie EPN 1138, EPN 1139, GY 1180, PY 307 (NODGE);
f) feste und flüssige Polyglyzidylether von o-Cresolformaldehyd Novolak wie ECN 1235, ECN 1273, ECN 1280, ECN 1299 (NODGE);
g) flüssige Glyzidylether von Alkoholen wie Shell Glyzidylether® 162, Araldit®DY 0390, Araldit®DY 0391;
h) flüssige und feste Glyzidylester von Karbonsäuren wie Shell Cardura® E Terephthalsäureester, Trimellithsäureester sowie deren Mischungen Araldit®PY 284 und Araldit® P811;
i) feste heterocyclische Epoxidharze (Triglyzidylisozyanurat) wie Araldit® PT 810;
j) flüssige zykloaliphatische Epoxidharze wie Araldit®CY 179;
k) flüssige N,N,O-Triglyzidylether von p-Aminophenol wie Araldit®MY 0510;
l) Tetraglyzidyl-4-4'-methylenbenzamin oder N,N,N',N'-Tetraglyzidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglyzidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglyzidylether auf der Basis von Bisphenolen, wie beispielsweise von 2,2-Bis-(4-hydroxyphenyl)-propan (Bisphenol-A), Bis-(4-hydroxyphenyl)-methan oder Mischungen von Bis-(ortho/parahydroxyphenyl)-methan (Bisphenol-F).

Ganz besonders bevorzugt sind Bisglyzidylalkoholether der nachstehenden Formel:

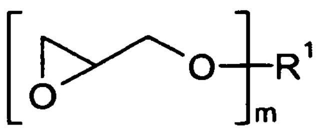

wobei m = 2, 3, 4, 5 oder 6 ist.

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Epoxidierte Fettsäureester (und andere Epoxidverbindungen)

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyzeride), wie Sojaöl oder Rapsöl, in Frage. Es können aber auch synthetische Produkte wie epoxidiertes Butyloleat zum Einsatz

kommen. Ebenso verwendet werden können epoxidiertes Polybutadien und Polyisopren, gegebenenfalls auch in partiell hydroxylierter Form, oder Glyzidylacrylat und Glyzidyl-methacrylat als Homo- bzw. Copolymer. Diese Epoxyverbindungen können auch auf eine Alumosalz-Verbindung aufgebracht sein; siehe hierzu auch DE 4.031.818 A1.

Flüssige oder hochviskose Glyzidyl- oder Epoxidverbindungen können auch auf kieselsäure- oder silikathaltigen Trägem aufgezogen und in einer festen, nicht verklebenden Form eingesetzt werden.

**Phenolverbindungen**

In diese Kategorie gehören Phenole und Aminophenole wie Resorcin, Resorcinmonomethylether, Phloroglucin, 2-Naphthol, 3-Hydroxyanilin und 3-Hydroxydiphenylamin.

**Phosphite** (Phosphorigsäureester)

Organische Phosphite sind bekannte Costabilisatoren für chlorhaltige Polymere. Beispiele sind Trioktyl-, Tridezyl-, Tridodezyl-, Tritridezyl-, Tripentadezyl-, Trioleyl, Tristearyl-, Triphenyl-, Trilauryl-, Trikresyl-, Tris-nonylphenyl-, Tris-2,4-t-butyl-phenyl- oder Trizyklohexylphosphit. Weitere geeignete Phosphite sind verschieden gemischte Aryl-dialkyl- bzw. Alkyl-diarylphosphite wie Phenyldioktyl-, Phenyldidezyl-, Phenyldidodezyl-, Phenylditridezyl-, Phenylditetradezyl-, Phenyldipentadezyl-, Oktyldiphenyl-, Dezyldiphenyl-, Undezyldiphenyl-, Dodezyldiphenyl-, Tridezyldiphenyl-, Tetradezyldiphenyl-, Pentadezyldiphenyl-, Oleyldiphenyl-, Stearyldiphenyl- und Dodezyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylen-glykol)phenylphosphit, Tetraisodezyl-dipropylenglykoldiphosphit, Tris-dipropylenglykolphosphit, Tetramethylolzyklohexanol-dezyldiphosphit, Tetramethylolzyklohexanolbutoxyethoxy-ethyldiphosphit, Tetramethylolzyklohexanol-nonylphenyl-diphosphit, Bis-nonyl-phenyl-di-trimethylolpropandiphosphit, Bis-2-butoxyethyl-ditrimethylolpropandiphosphit, Trishydroxyethylisozyanurat-hexadezyltriphosphit, Didezylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gernische der statistischen Zusammensetzung $(H_{19}C_9\text{-}C_6H_4)O_{1,5}P(OC_{12,13}H_{25,27})_{1,5}$ oder $(C_8H_{17}\text{-}C_6H_4\text{-}O\text{-})_2P(i\text{-}C_8H_{17}O),(H_{19}C_9\text{-}C_6H_4)O_{1,5}P(OC_{9,11}H_{19,23})_{1,5}$. Technische Beispiele sind Naugard P, MarkCH300, Mark CH301, Mark CH302 und Mark CH55 (Hersteller Crompton Corp. USA). Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.

**Sterisch gehinderte Amine** (HALS)

Bei den sterisch gehinderten Aminen handelt es sich allgemein um Verbindungen enthaltend die Gruppe

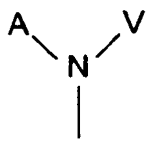

worin A und V unabhängig voneinander $C_{1-8}$-Alkyl-, $C_{3-8}$ Alkenyl-, $C_{5-8}$-Zykloalkyl-, oder $C_{7-9}$ -Phenylalkyl- sind, oder zusammen gegebenenfalls durch O, NH oder $CH_3$-N unterbrochenes $C_{2-5}$ -Alkylen bilden, oder um ein cyclisches sterisch gehindertes Amin, insbesondere eine Verbindung aus der Reihe der Alkyl- bzw. Polyalkylpiperidine, vor allem der Tetramethylpiperidine enthaltend die Gruppe

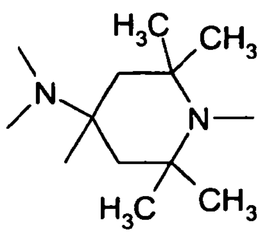

Bevorzugt sind als weitere Komponentengruppen Polyole und Disaccharidalkohole, ß-Diketone, Thiophosphite und Thiophosphate sowie Merkaptokarbonsäureester.

**Polyole** (und Zuckeralkohole)

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Laktose, Leucrose, Tris-(hydroxyethyl)isozyanurat, Palatinit, Tetramethylzyklohexanol, Tetramethylolzyklopentanol, Tetramethylolpyranol, Glyzerin, Diglyzerin, Polyglyzerin, Thiodiglyzerin oder 1-O-$\propto$-D-Glyzopyranosyl-D-mannitdihydrat. Bevorzugt sind Disaccharidalkohole. Verwendung finden auch Polyolsirupe wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewandt werden.

**1,3-Diketone** (und 1,3-Ketoester)

Verwendbare 1,3-Dicarbonylverbindungen sind lineare oder cyclische Dicarbonylverbindungen sein. Bevorzugt werden Dicarbonylverbindungen der Formel $R'_1CO\ CHR_2'-COR'_3$ verwandt, worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Zykloalkyl, durch $C_1$-$C_4$-alkylsubstituiertes $C_5$-$C_{12}$-Zykloalkyl oder eine Gruppe $-R'_5-S-R'_6$ oder $-R'_5-O-R'_6$ bedeutet; $R'_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe-CO-$R'_4$ bedeutet; $R'_3$ eine der für $R'_1$ gegebenen Bedeutungen hat oder $C_1$-$C_{18}$-Alkoxy bedeutet, $R'_4$ $C_1$-$C_4$-Alkyl oder Phenyl bedeutet; $R'_5$ $C_1$-$C_{10}$-Alkylen bedeutet und $R'_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone PS - EP 0.346.279 A1 und die Oxa- und Thiadiketone in PS - EP 0.307.358 A1 ebenso wie die auf Isozyanursäure basierenden Ketoester in PS - US 4,339,383.

$R'_1$ und $R'_3$ als Alkyl können insbesondere $C_1$-$C_{18}$-Alkyl sein, z. B. Methyl, Ethyl, n-Propyl, Isopropyl, n-Butyl, tert-Butyl, Pentyl, Hexyl, Heptyl, Oktyl, Dezyl, Dodezyl oder Oktadezyl.

$R'_1$ und $R'_3$ als Hydroxyalkyl stellen insbesondere eine Gruppe $-(CH_2)_n-OH$ dar, worin n 5, 6 oder 7 ist.

$R'_1$ und $R'_2$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Zykloalkyl oder Alkylzykloalkyl sind insbesondere Zyklohexyl oder Methylzyklohexyl.

$R'_2$ als Alkyl kann insbesondere $C_1$-$C_4$-Alkyl sein. $R'_2$ als $C_2$-$C_{12}$-Alkenyl kann insbesondere Allyl sein. $R'_2$ als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Oktyloxy, Dodezyloxy, Tridezyloxy, Tetradezyloxy oder Oktadezyloxy sein. $R'_5$ als $C_1$-$C_{10}$-Alkylen ist insbesondere $C_2$-$C_4$-Alkylen. $R'_6$ als Alkyl ist insbesondere $C_4$-$C_{12}$-Alkyl, z. B. Butyl, Hexyl, Oktyl, Dezyl oder Dodezyl.

$R'_6$ als Alkylphenyl ist insbesondere Tolyl. $R'_6$ als Phenylalkyl ist insbesondere Benzyl.

Beispiele für 1,3-Dicarbonylverbindungen der vorstehenden allgemeinen Formel sowie deren Alkali-, Erdalkali- und Zinkchelate sind Acetylazeton, Butanoylazeton, Heptanoylazeton, Stearoylazeton, Palmitoylazeton, Lauroylazeton, 7-tert.-Nonylthioheptandion-2,4, Benzoylazeton, Dibenzoylmethan, Lauroylbenzoylmethan, Palmitoylbenzoylmethan, Stearoylbenzoylmethan, Isooktylbenzoylmethan, 5-Hydroxykapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-azetylnonan, Benzoyl-acetylphenylmethan, Stearoyl-4-methoxybenzoylmethan, Bis(4-tert-butylbenzoyl)methan, Benzoylformylmethan, Benzoyl-phenylacetylmethan, Bis-zyklohexanoyl-methan, Di-pivaloyl-methan, 2-Azetyl-zyklopentanon, 2-Benzoylzyklopentanon, Diazetessigsäuremethyl-, -ethyl- und -allylester, Benzoyl-, Propionyl- und Butyryl-azetessigsäuremethyl- und -ethylester, Triazetylmethan, Azetessigsäuremethyl-, -ethyl-, -hexyl-, -oktyl-, -dodezyl- oder -oktadezylester, Benzoyl-essigsäuremethyl-, -ethyl-, -butyl-, -2-ethylhexyl-, -dodezyl- oder - oktadezylester, sowie Propionyl- und Butyrylessigsäure-$C_1$-$C_{18}$-alkylester. Stearoylessigsäureethyl-, -propyl-, -butyl-, -hexyl- oder -oktylester sowie mehrkernige ß-Ketoester wie in PS - EP-A 0 433 230 beschrieben und Dehydrazetsäure sowie deren Zink-, Magnesium- oder Alkalisalze. Bevorzugt sind Ca-, Mg- und Zn-Salze des Azetylazetons und der Dehydrazetsäure.

Besonders bevorzugt sind 1,3-Diketoverbindungen der obigen Formel, worin $R'_1$ $C_1$-$C_{18}$-Alkyl, Phenyl, durch OH, Methyl oder Methoxy substituiertes Phenyl, $C_7$-$C_{10}$-Phenylalkyl oder Zyklohexyl ist, $R'_2$ Wasserstoff ist und $R'_3$ eine der für $R'_1$ gegebenen Bedeutungen hat. Ebenso gehören hierzu heterozyklische 2,4-Dione wie N-Phenyl-3-azetylpyrrolidin-2,4-dion. Weitere Vertreter diese Kategorie sind beschrieben in PS - EP 0.734.414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

**Thiophosphite** (und Thiophosphate)

Unter Thiophosphiten bzw.Thiophosphaten sind Verbindungen vom allgemeinen Typ $(RS)_3P$, $(RS)_3P=O$ bzw. $(RS)_3P=S$ zu verstehen, wie sie in den Druckschriften PS-DE 28.09.492 A1, EP 0.090.770 A1 und EP 0.573.394 A1 beschrieben werden. Beispiele für diese Verbindungen sind Trithiohexylphosphit, Trithiooktylphosphit, Trithio-laurylphosphit, Trithiobenzylphosphit, Trithiophosphorigsäure-tris-(carbo-i-oktyloxy)-methylester. Trithiophosphorigsäure-tris-(carbo-trimethylzyklohexyloxy)-methylester, Trithiophosphorsäure-S,S,S-tris-(carbo-i-oktyloxy)-methylester, Trithiophosphorsäure-S,S,S-tris-(carbo-2-ethylhexyloxy)-methylester, Trithiophosphorsäure-S,S,S-tris-1-(carbo-hexyloxy)-ethyl-ester, Trithiophosphorsäure-S,S,S-tris-1-(carbo-2-ethylhexyloxy)-ethylester, Trithiophosphorsäure-S,S,S-tris-2-(carbo-2-ethylhexyloxy)-ethylester.

**Merkaptokarbonsäure-Ester**

Beispiele für diese Verbindungen sind Ester der Thioglykolsäure, Thioäpfelsäure, Merkaptopropionsäure, der Merkaptobenzoesäuren bzw. der Thiomilchsäure, Merkaptoethylstearat und -oleat, wie sie in den Druckschriften PS - FR-A 2.459.816, EP 0.090.748 A1, FR-A 2.552.440, EP 0.365.483 A1 beschrieben sind. Die Merkaptokarbonsäureester umfassen auch Polyolester bzw. deren Partialester.

Den Stabilisatoren können noch weitere Additive zugesetzt werden:

- Füllstoffe
- Gleitmittel
- Weichmacher
- Pigmente
- Antioxidantien
- UV-Absorber
- Optische Aufhelller
- Treibmittel
- Antistatika

Es können außerdem noch weitere Additive wie Biozide (Antimikrobika), Antifogging-Agents, Schlagzähmodifikatoren, Verarbeitungshilfen, Geliermittel, Flammschutzmittel, Metalldesaktivatoren, Kompatibilisatoren, Haftmittel, Kalandrierhilfen, Form-Trennmittel, Schmiermittel sowie Duftmittel und Colorants zugegen sein. Beispiele für solche zusätzlichen Komponenten sind weiter unten aufgeführt und erläutert (vgl. "Handbook of PVC-Formulating" von E. J. Wickson, John Wiley & Sons, New York 1993).

**Füllstoffe**

Es werden z.B. Kalziumkarbonat, Dolomit, Wollastonit, Magnesiumoxid, Magnesiumhydroxid, Silikate, China-Clay, Talk, Glasfasern, Glaskugeln, Holzmehl, Glimmer, Metalloxide oder Metallhydroxide, Ruß, Graphit, Gesteinsmehl, Schwerspat, Glasfasern, Talk, Kaolin und Kreide verwandt. Bevorzugt ist Kreide (auch gecoated) (HANDBOOK OF PVC FORMULATING E. J. Wickson, John Wiley & Sons, 1993, SS. 393-449) und Verstärkungsmittel (TASCHENBUCH DER KUNSTSTOFFADDITIVE, R. Gächter & H. Müller, Carl Hanser, 1990, S. 549 - 615).

Die Füllstoffe können in einer Menge von vorzugsweise mindestens 1 Teil, beispielsweise 5 bis 200, zweckmäßig 5 bis 150 und insbesondere 5 bis 100 Gew.-Teilen, bezogen auf 100 Gew.-Teile PVC, eingesetzt werden.

**Gleitmittel**

Als Gleitmittel kommen beispielsweise in Betracht: Montanwachse, Fettsäureester, PE- und PP-Wachse, Amidwachse, Chlorparaffine, Glyzerinester oder Erdalkaliseifen, ferner Fettketone sowie Kombinationen davon, wie in PS-EP 0.259.783 A1 aufgeführt. Bevorzugt ist Kalziumstearat.

**Weichmacher**

Als organische Weichmacher kommen beispielsweise solche aus den folgenden Gruppen in Betracht:

(i) Phthalsäureester wie bevorzugt Di-2-ethylhexyl-, Di-iso-nonyl- und Di-isodezyl-phthalat, die auch unter den gebräuchlichen Abkürzungen DOP (Dioktylphthalat, Di-2-ethylhexyl-phthalat), DINP (Diisononylphthalat), DIDP (Diisodezylphthalat) bekannt sind

(ii) Ester aliphatischer Dikarbonsäuren, insbesondere Ester von Adipin-, Azelain- und Sebazinsäure, bevorzugt Di-2-ethylhexyladipat und Di-iso-oktyladipat

(iii) Trimellitsäureester, beispielsweise Tri-2-ethylhexyltrimellitat, Tri-iso-dezyltrimellitat (Gemisch), Tri-iso-tridezyltrimellitat, Tri-iso-oktyltrimellitat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellitate: gebräuchliche Abkürzungen sind TOTM (Trioktyltrimellitat, Tri-2-ethylhexyl-trimellitat), TIDTM (Triisodezyltrimellitat) und TITDTM (Triisotridezyltrimellitat)

(iv) Epoxyweichmacher; in der Hauptsache sind das epoxidierte ungesättigte Fettsäuren z.B. epoxidiertes Sojabohnenöl

(v) Polymerweichmacher: Die gebräuchlichsten Ausgangsmaterialien für ihre Herstellung sind Dikarbonsäuren wie Adipin-, Phthal-, Azelain- und Sebazinsäure; Diole wie 1,2-Propandiol, 1,3-Butandiol, 1,4-Butandiol, 1,6-Hexandiol, Neopentylglykol und Diethylenglykol, (s. ADMEX®-Typen der Velsicol Corp. und PX-811 der Asahi Denka)

(vi) Phosphorsäureester: Eine Definition dieser Ester ist im weiter vorn genannten " TASCHENBUCH DER KUNSTSTOFFADDITIVE " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Kresyl-diphenylphosphat, Triphenylphosphat, Trikresylphosphat und Trixylenylphosphat; bevorzugt sind Tri-2-ethylhexyl-phosphat sowie Reofos® 50 und 95 (Ciba Spezialitätenchemie)

(vii) Chlorierte Kohlenwasserstoffe (Paraffine)

(viii) Kohlenwasserstoffe

(ix) Monoester, z.B. Butyloleat, Phenoxyethyloleat, Tetrahydrofurfuryloleat und Alkylsulfonsäureester

(x) Glykolester, z.B. Diglykolbenzoate

(xi) Zitronensäureester, z.B. Tributylzitrat und Azetyltributylzitrat wie in PS - WO 02/05206 beschrieben

(xii) Perhydrophthal-, -isophthal- und -terephthalester sowie Perhydroglykol- und diglykolbenzoatester; bevorzugt ist Perhydro-diisononylphthalat (Hexamoll® DINCH-Hersteller BASF) wie in PS - DE 197.56.913 A1, DE 199.27.977 A1, DE 199.27.978 A1 und DE 199.27.979 A1 beschrieben.

(xiii) Rizinussöl basierte Weichmacher (Soft-N-Safe®, Hersteller Fa. DANISCO)

(xiv) Terpolymere Keton-Ethylen-Ester Elvaloy® KEE, (Elvaloy® 741, Elvaloy® 742, Hersteller Fa. DuPont)

Trimellitsäureester sind ganz besonders bevorzugt.

Eine Definition dieser Weichmacher und Beispiele für solche sind in"TASCHENBUCH DER KUNSTSTOFFADDITIVE ", R. Gächter/H. Müller, Carl Hanser Verlag, 3. Aufl., 1989, Kapitel 5.9.6, Seiten 412-415, sowie in "PVC TECHNOLOGY ", W.V.Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise 5 bis 50 Gew.-Teilen, zweckmäßig 10 bis 45 Gew.-Teilen, bezogen auf 100 Gew.-Teile PVC, angewandt werden. Hart- bzw. Halbhart-PVC enthält bevorzugt bis zu 20 %, besonders bevorzugt bis zu 5 % oder keinen Weichmacher.

**Pigmente**

Geeignete Stoffe sind dem Fachmann bekannt. Beispiele für anorganische Pigmente sind $TiO_2$, Pigmente auf Zirkonoxidbasis, $BaSO_4$, Zinkoxid (Zinkweiss) und Lithopone (Zinksulfid/Bariumsulfat), Ruß, Ruß-Titandioxid-Mischungen, Eisenoxidpigmente, $Sb_2O_3$, $(Ti,Ba,Sb)O_2$, $Cr_2O_3$, Spinelle wie Kobaltblau und Kobaltgrün, Cd(S,Se), Ultramarinblau. Organische Pigmente sind z.B. Azopigmente, Phthalozyaninpigmente, Chinacridonpigmente, Perylenpigmente, Diketopyrrolopyrrolpigmente und Anthrachinon-pigmente. Bevorzugt ist $TiO_2$ auch in mikronisierter Form. Eine Definition und weitere Beschreibungen finden sich im "HANDBOOK OF PVC FORMULATING", E. J.Wickson, John Wiley & Sons, New York, 1993.

**Antioxidantien**

Dazu zählen sterisch gehinderte Phenol, wie alkylierte Monophenole, z. B. 2,6-Di-tert-butyl-4-methylphenol, Alkylthiomethylphenole, z.B. 2,4-Di-oktylthiomethyl-6-tert-butylphenol, alkylierte Hydrochinone, z. B. 2,6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioktadezyl-2,2-bis-(3,5-di-tert-butyl-2-hydroxybenzyl)-malonat, Hydroxybenzyl-Aromaten, z.B. 1,3,5-Tris-(3,5-di-tert-butyl-4hydroxybenzyl)-2,4,6-trimethylbenzol, Triazinverbindungen, z.B. 2,4-Bis-oktyl-merkapto-6-(3,5-di-tert-butyl-4-hydroxyanilino)1,3,5-triazin, Phosphonate und Phosphonite, z.B. Dimethyl-2,5-di-tert-butyl-4-hydroxybenzylphosphonat, Azylaminophenole, z.B. 4-Hydroxy-laurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dizyklohexyl-4-hydroxyphenyl)-propionsäure, Ester der 3,5-Di-tert-butyl-4-hydroxy-phenylessigsäure mit

ein- oder mehrwertigen Alkoholen, Amide der beta-(3,5-Di-tert-butyl-4-hydroxyphenyl)-propionsäure, z.B. N,N'-Bis-(3,5-di-tert-butyl-4-hydroxyphenylpropionyl)-hexamethylendiamin, Vitamin E (Tocopherol) und Abkömmlinge sowie D,L-Ascorbinsäure. Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

UV-Absorber (und Lichtschutzmittel)

Beispiele dafür sind 2-(2'-Hydroxyphenyl)-benztriazole, z.B. 2-(2'-Hydroxy-5'-methylphenyl)-benztriazol, 2-Hydroxybenzophenone, Ester von gegebenenfalls substituierten Benzoesäuren, z.B. 4-tert-Butyl-phenylsalizylat, Phenylsalizylat, Acrylate, Nickelverbindungen, Oxalsäurediamide, z.B. 4,4'-Di-oktyloxy-oxanilid, 2,2'-Di-oktyloxy-5,5'-di-tert-butyl-oxanilid, 2-(2-Hydroxyphenyl)-1,3,5-triazine, z.B. 2,4,6-Tris(2-hydroxy-4-oktyloxyphenyl)-1,3,5-triazin, 2-(2-Hydroxy-4-oktyloxyphenyl)-4,6-bis-(2,4-dimethylphenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethyl-piperidin-4-yl)-sebazat, Bis(2,2,6,6-tetramethyl-piperidin-4-yl)-succinat sowie Benzoxazinone wie 1,4-Bis-benzoxazinonyl-benzol.

**Optische Aufheller**

Beispiele hierfür sind Bis-benzol(1,4)-oxazole, Phenylkumarine und Bis-styrylbiphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis-(benzoxazol-2-yl)-naphthalin. Bevorzugt sind Lösungen optischer Aufheller in einem Weichmacher, beispielsweise DOP.

**Treibmittel**

Treibmittel sind z.B. organische Azo- und Hydrazoverbindungen, Tetrazole, Oxazine, Isatinsäureanhydrid, N-Methylisatinsäureanhydrid, sowie Soda und Natriumbikarbonat. Bevorzugt sind Azodikarbonamid und Natriumbikarbonat sowie deren Mischungen. Ganz besonders bevorzugt ist Isatinsäureanhydrid oder N-Methylisatinsäureanhydrid speziell in Weich-PVC oder PVC-Halbhart.

**Antistatika**

Antistatika werden eingeteilt in nichtionische(a), anionische(b), kationische(c) und amphotere(d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäure-bis-fettalkoholester-alkalisalze. Zu (c) gehören quaternäre Fettalkylammoniumsalze und zu (d) gehören Fettalkylbetaine und Fettalkylimidazolinbetaine. Einzelne bevorzugte Verbindungen sind Laurinsäurediethanolamid, Myristyldiethanolamin, Na-oktadezyl-sulfonat und Na-bisoktadezylphosphat. Das Vorhandensein von Komponente (D) gestattet in vielen Fällen aufgrund der Inhärenzeigenschaften eine Reduktion der Einsatzmenge von teuren Antistatika.

Definitionen und Beispiele für weitere Zusätze wie Schlagzähmodifikatoren und Verarbeitungshilfen, Geliermittel, Biozide, Metalldesaktivatoren, Flammschutzmittel, Antifogging-Agents sowie Kompatibilisatoren sind beschrieben in "HANDBUCH DER KUNSTSTOFFADDITIVE", R. Gächter/H. Müller, Carl Hanser Verlag, 3. Aufl., 1989, sowie 4. Aufl. 2001 und im "HANDBOOK OF POLYVINYL CHLORIDE FORMULATING" E. J. Wickson, J. Wiley & Sons, 1993, sowie in "PLASTICS ADDITIVES" G. Pritchard, Chapman & Hall, London, 1st Ed., 1998. Schlagzähmodifikatoren sind ferner ausführlich beschrieben in "IMPACT MODIFIERS FOR PVC", J. T. Lutz/D. L. Dunkelberger, John Wiley & Sons, 1992.

Gemäß der vorliegenden Erfindung wird zusätzlich zum primären Thermostabilisator und den Additiven, eine ausreichende Menge einer Zusammensetzung, die wäßrige Metall-Perchlorat-Salz-Lösung und kalzinierten Dolomit umfasst, dazu verwendet, die Beständigkeit des synthetischen Polymers gegenüber Beeinträchtigungen von physikalischen Eigenschaften durch längere Exposition bei mittleren Temperaturen zu verbessern, wie z.B. jene, die Kraftfahrzeugkomponenten im Betrieb erfahren. Die Stabilisatorsysteme der Erfindung, die Thermostabilisatoren und Langzeit-Thermostabilisatoren umfassen, können mit Polyvinylchlorid-Harzen kompoundiert, formuliert und nach gängigen Kunststoffverarbeitungsverfahren, bei Verarbeitungstemperaturen von 150 bis 205°C, geformt werden, wie z.B. Kalandrierenn, Extrudieren, Spritzgießen und Pressformen, Blasformen, Rotationsformen, Hohlgießen und Tauchformen, Gießen in Lösung, elektrostatische Spritz- und Wirbelbettbeschichtung, um eine Vielzahl an Kraftfahrzeugkomponenten für den Innen- und Außeneinsatz herzustellen, wie z.B. Armaturenbretter, Sitzüberzüge, Bodenmatten, Türplatten, Armlehnen und Kopfstützen, Behälter, Fächer, Körperseiten-Formteile, Fensterleistenformteile, Sitzecken und Kopfleisten, Tür- und Fensterknäufe sowie aufprallsichere Armaturenbretter. Kompoundier-Komponenten, wie z.B. Weichmacher, Schmiermittel, Stoßmodifikatoren, Verarbeitungshilfen, Füllstoffe, Farbstoffe, Antistatika, Kleber, Flammschutzmittel, Fungizide und Antiblockiermittel, können eingearbeitet werden, um die Verarbeitung solcher Kraftfahrzeugkomponenten zu vereinfachen.

Ein weiterer Gegenstand der vorliegenden Erfindung ist eine Zusammensetzung enthaltend ein halogenhaltiges Polymer und ein erfindungsgemäßes Stabilisatorsystem.

Außerdem ist Gegenstand der vorliegenden Erfindung die Verwendung des erfindungsgemäßen Stabilisatorsystems zur Stabilisierung eines halogenhaltigen, insbesondere chlorhaltigen, Polymers.

Vorzugsweise beträgt die Menge an dem erfindungsgemäßen Stabilisatorsystem bezogen auf das halogenhaltige Polymer 0,1 bis 50 Gew.-%, mehr bevorzugt 0,1 bis 30 Gew.-%, mehr bevorzugt 0,1 bis 20 Gew.-%.

Bei dem halogenhaltigen Polymer handelt es sich vorzugsweise um ein chlorhaltiges Polymer, wie Polyvinylchlorid (PVC). Weiterhin bevorzugt handelt es sich bei dem halogenhaltigen Polymer um ein Hart-, Weich- oder Pasten-PVC. Ebenso bevorzugt handelt es sich bei dem halogenhaltigen polymer um ein Rezyklatpolymer.

Beispiele für die zu stabilisierenden chlorhaltigen Polymere sind Polymere des Vinylchlorids, Vinylidenchlorids, Vinylharze enthaltend Vinylchlorideinheiten, wie Kopolymere des Vinylchlorids und Vinylester von aliphatischen Säuren, insbesondere Vinylazetat, Kopolymere des Vinylchlorids mit Estern der Acryl- und Methacrylsäure und mit Acrylnitril, Kopolymere des Vinylchlorids mit Dienverbindungen und ungesättigten Dikarbonsäuren oder deren Anhydride, wie Kopolymere des Vinylchlorids mit Diethylmaleat, Diethylfumarat oder Maleinsäureanhydrid, nachchlorierte Polymere und Kopolymere des Vinylchlorids, Kopolymere des Vinylchlorids und Vinylidenchlorids mit ungesättigten Aldehyden, Ketonen und anderen, wie Acrolein, Krotonaldehyd, Vinylmethylketon, Vinylmethylether, Vinylisobutylether und ähnliche; Polymere des Vinylidenchlorids und Kopolymere desselben mit Vinylchlorid und anderen polymerisierbaren Verbindungen; Polymere des Vinylchlorazetates und Dichlordivinylethers; chlorierte Polymere des Vinylazetates, chlorierte polymere Ester der Acrylsäure und der $\alpha$-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Kopolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylazetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Kopolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylaktonen, insbesondere aus der Gruppe ABS, NBR, NAR, SAN und EVA. Die verwandten Abkürzungen für die Kopolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA Ethylen-Vinylazetat. Es kommen insbesondere auch Styrol-Acrylnitril-Kopolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Kopolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Kopolymeren NBR, NAR und/oder EVA, insbesondere jedoch EVA.

Weiterhin kommen zur Stabilisierung im Rahmen dieser Erfindung auch insbesondere Rezyklate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Rezyklat. Ein weiterer Einsatz des erfindungsgemäßen Stabilisatorsystems beruht darin, dass dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Weiterhin betrifft die vorliegende Erfindung Gegenstände, die eine erfindungsgemäße Zusammensetzung enthalten. Hierbei handelt es sich vorzugsweise um Gebrauchsgegenstände. Beispiele hierfür sind Holz-Kunstoff-Verbundwerkstoffe (WPC = Wood Plastic Composites), Folien, Profile, Fußbodenbeläge, KFZ-Teile, Wandtapeten, Schläuche, Spritzgussteile oder Drahtummantelungen (Kabel).

Ferner betrifft die vorliegende Erfindung die Verwendung einer erfindungsgemäßen Zusammensetzung zur Herstellung eines erfindungsgemäßen Gegenstandes.

Ein weiterer Gegenstand der Erfindung sind Gebrauchsmittel (Gebrauchsgegenstände), die insbesondere PVC und erfindungsgemäße Stabilisatorsysteme enthalten.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem

Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe "Kunststoffhandbuch PVC", Band 2/2, W. Becker/H. Braun, 2. Aufl. 1985, Carl Hanser Verlag, S. 1236-1277.

Bevorzugt ist auch die Verwendung von Gebrauchsartikeln, die sich durch eine besondere feine Schaumstruktur auszeichnen. Dies gilt für Hart-, Weich- und Halbhart-PVC. Besonderes wichtig ist dieser Aspekt bei Tapeten und Fußböden aus Weich-PVC, wobei Zn- oder Sn-Stabilisatoren als Kicker zur Erzielung eines feinen Schaumes verwendet werden.

Das nachfolgende Beispiel veranschaulicht die Nützlichkeit der vorliegenden Erfindung.

**Beispiel**

I. Durchführung der Trägerung

450,0g der Trägersubstanz werden mit 71,4g einer 70%igen wäßrigen Natriumperchloratlösung intensiv gemischt. Es resultiert ein weißes Pulver in quantitativer Ausbeute (die Trägerung mit Natriumperchlorat beträgt 9,6%).

**II. Herstellung der Walzfelle:**

Die nach Tabelle 1 zubereiteten Mischungen werden auf einem Prüfwalzwerk Polymix150P (Fa.Schwabenthan) jeweils 5 Minuten, 10 UpM, Friktion: -10%) bei der angegebenen Temperatur plastifiziert. Die so erhaltenen Folien (Dicke 1,0mm) werden weiteren Messungen zugeführt.

**Tab. 1 : Formulierungen**

| Komponenten | 1 | 2 | 3 | 4 |
|---|---|---|---|---|
| PVC (Evipol SH6830)<br>K-Wert = 68 | 150 | 150 | 150 | 150 |
| Titandioxid | 3,8 | 3,8 | 3,8 | 3,8 |
| Kreide (Polcarb SB) | 6,6 | 6,6 | 6,6 | 6,6 |
| Impact Modifier (Kane PA 630) | 7,2 | 7,2 | 7,2 | 7,2 |
| Stearylstearat (Gleitmittel 1) | 0,4 | 0,4 | 0,4 | 0,4 |
| PE-Wax (Gleitmittel 2) | 0,3 | 0,3 | 0,3 | 0,3 |
| Verarbeitungshilfe | 0,7 | 0,7 | 0,7 | 0,7 |
| Kalziumstearat | 0,6 | 0,6 | 0,6 | 0,6 |
| Bleistearat | 0,2 | 0,2 | 0,2 | 0,2 |
| 2-basisches Bleiphosphit | 2,5 | 2,5 | 2,5 | 2,5 |
| Costabilisator | 0,1 | 0,1 | 0,1 | 0,1 |
| Pigmente | 0,12 | 0,12 | 0,12 | 0,12 |
| Kalz. Dolomit (Ce_Mix_115) Mit Natriumperchlorat geträgert (erfindungsgemäß) | 0,2 | -- | 0,5 | -- |
| Actilox CAHC mit Natriumperchlorat geträgert (Stand der Technik) | -- | 0,2 | -- | 0,5 |

**III. Durchführung der Dehydrochlorierungsmessungen (DHC):**

Die DHC ist ein Maß für die HCl-Abspaltung von PVC, die bei thermischer Belastung stattfindet. Die abgespaltene Salzsäure wird mit Stickstoffgas in eine Vorlage mit dest. Wasser gespült und dort der Anstieg der Leitfähigkeit in

Mikrosiemens pro Zentimeter (µS/cm) gemessen. Als Kennzahlen dienen die zugehörigen Minutenwerte [Min], die tabellarisch zusammengefasst werden. Je länger das Zeitintervall zur Erreichung einer bestimmten Leitfähigkeit, desto thermostabiler ist die PVC-Probe.
Gerätetyp: PVC Thermomat 763 (Fa. Metrohm)

Die Messungen erfolgen nach DN 53381 Teil 1, Verfahren B: Leitfähigkeitsmessung.

| | | |
|---|---|---|
| Parameter: | Probeneinwaage: | 500 ± 0,5mg (Walzfellschnitzel) |
| | Temperatur: | °C (wie in den Beispielen angegeben) |
| | Flow: | 7 l/h (Stickstoff 5.0) |
| | Absorptionsvol.: | 60ml (VE-Wasser) |
| | Auswertung: | Stabilitätszeit , $t_{50}$ (Leitfähigkeit von 50 µS/cm - Angabe in Minutenwerten) |

**IV. Ergebnisse**

**Tab. 2: Thermostabilität in Minuten**

| Formulierungen | Stabilität in Minuten [$t_{50}$-Werte] |
|---|---|
| 1 | 64 |
| 2 | 56 |
| 3 | 92 |
| 4 | 61 |

Wie aus Tab. 2 zu entnehmen, sind die erfindungsgemäßen Formulierungen 1 und 3 (unterschiedliche Konzentrationen an geträgertem Produkt) signifikant besser als die Formulierungen 2 und 4 nach dem Stand der Technik.

**Patentansprüche**

1. Stabilisatorsystem enthaltend einen Thermostabilisator und einen geträgerten zumindest teilweise kalzinierten Dolomit der Formel:

$$Mt^1X^1{}_*CaX^2$$

mit

$Mt^1$ = Mg oder Zn;
$X^1$ = O oder $(OH)_2$;
$X^2$ = O; $(OH)_2$ oder $CO_3$,

wobei der kalzinierte Dolomit mit einem Metallperchlorat der Formel

$$Mt^2(ClO_4)_{m*}nH_2O$$

mit $Mt^2$ = Li, Na, K, Mg, Ca, Ba, Zn , Al, La, Ce;
m = 1, 2 oder 3, wobei m derart ausgewählt ist, dass die Ladung des Metallions $Mt^2$ kompensiert ist;
n = 0-3

geträgert ist und wobei das Stabilisatorsystem keine der Verbindungen ausgewählt aus der Gruppe bestehend aus **(B)** und **(C)** enthält, wenn $Mt^1$ Mg ist und wobei

**(B)** mindestens eine stickstoffhaltige organische Verbindung ausgewählt aus der Gruppe bestehend aus **(B1)** und **(B2)** ist, wobei **(B1)** ein tert. Alkanolamin und **(B2)** ein Enaminon oder ein Harnstoff ist und
(C) ein Erdalkali-alumohydroxocarbonat der Formel (C)

$$(M_{1-x}Zn_x)_yAl_2(OH)_{4+2y}\,CO_{3}*\,zH_2O \qquad \textbf{(C)}$$

mit M = Magnesium oder/und Calcium; x = 0 bis 0,5; y = 2 bis 8 und z = 0 bis 12 ist.

**2.** Stabilisatorsystem nach Anspruch 1, **dadurch gekennzeichnet, dass** der Stabilisator ein metallhaltiger Stabilisator ist.

**3.** Stabilisatorsystem nach Anspruch 2, **dadurch gekennzeichnet, dass** der metallhaltige Stabilisator ein Organozinn- oder ein Bleistabilisator, ein Kalzium/Zink- oder ein Barium-Zink-Stabilisator ist.

**4.** Stabilisatorsystem nach Anspruch 1 bis 3, **dadurch gekennzeichnet, dass** der kalzinierte Dolomit ein kalzinierter Magnesium-Dolomit ist.

**5.** Stabilisatorsystem nach Anspruch 1 bis 4, **dadurch gekennzeichnet, dass** der kalzinierte Dolomit Kalzium-Magnesium-Oxid (MgO*CaO) ist.

**6.** Stabilisatorsystem nach Anspruch 1 bis 5, **dadurch gekennzeichnet, dass** das Metallperchlorat Natriumperchlorat ist.

**7.** Stabilisatorsystem nach Anspruch 1 bis 6, **dadurch gekennzeichnet, dass** der Anteil des geträgerten kalzinierten Dolomites 0,001 bis 30 Gew.-% bezogen auf die Gesamtmenge des Stabilisatorsystems beträgt.

**8.** Zusammensetzungen enthaltend ein halogenhaltiges Polymer und ein Stabilisatorsystem nach einem der Ansprüche 1 bis 7.

**9.** Gegenstand enthaltend eine Zusammensetzung nach Anspruch 8.

**10.** Verwendung eines Stabilisatorsystems nach einem der Ansprüche 1 bis 9 zur Stabilisierung eines halogenhaltigen Polymers.

**11.** Verfahren zum Herstellen eines kalzinierten geträgerten Dolomits wie in einem der Ansprüche 1 bis 7 definiert, die Schritte enthaltend

(a) Bereitstellen eines zumindest teilweise kalzinierten Dolomits der Formel $Mt^1X^1{*}CaX^2$
mit

$Mt^1$ = Mg oder Zn;
$X^1$ = O oder $(OH)_2$;
$X^2$ = O; $(OH)_2$ oder $CO_3$;

(b) Trägern des Dolomits mit einer wässrigen Metallperchloratlösung, wobei das Metallperchlorat die Formel

$$Mt^2(ClO_4)_m{*}nH_2O$$

mit $Mt^2$ = Li, Na, K, Mg, Ca, Ba, Zn , Al, La, Ce;
m = 1, 2 oder 3, wobei m derart ausgewählt ist, dass die Ladung des Metallions $Mt^2$ kompensiert ist;
n = 0-3

(c) gegebenenfalls Trocknen des geträgerten Dolomits.

**12.** Verfahren nach Anspruch 11, wobei der Metallperchlorat-Gehalt der wässrigen Lösung 5 bis 80 Gew.-% beträgt.

**13.** Verfahren nach Anspruch 12, wobei der Anteil der Metallperchloratlösung 1 bis 60 Gew.-% bezogen auf das Gesamtgewicht des geträgerten Dolomits beträgt.

## Claims

1. A stabilizer system comprising a thermal stabilizer and a supported, at least partly calcined dolomite of the formula:

$$Mt^1X^1{*}CaX^2$$

where

$Mt^1$ = Mg or Zn;
$X^1$ = O or $(OH)_2$;
$X^2$ = O; $(OH)_2$ or $CO_3$,

wherein the calcined dolomite has been supported with a metal perchlorate of the formula

$$Mt^2(ClO_4)_m{*}nH_2O$$

where $Mt^2$ = Li, Na, K, Mg, Ca, Ba, Zn, Al, La, Ce;
m = 1, 2 or 3, m being selected so as to compensate for the charge of the metal ion $Mt^2$;
n = 0 to 3,

and wherein the stabilizer system does not comprise any of the compounds selected from the group consisting of **(B)** and (C) when $Mt^1$ is Mg, and wherein

**(B)** is at least one nitrogen-containing organic compound selected from the group consisting of **(B1)** and **(B2), (B1)** being a tert-alkanolamine and **(B2)** being an enaminone or a urea, and
**(C)** is an alkaline earth metal aluminohydroxocarbonate of the formula **(C)**

$$(M_{1-x}Zn_x)_yAl_2(OH)_{4+2y}\,CO_3{*}zH_2O \qquad \textbf{(C)}$$

where M = magnesium or/and calcium; x = 0 to 0.5; y = 2 to 8 and z = 0 to 12.

2. The stabilizer system as claimed in claim 1, **characterized in that** the stabilizer is a metal-containing stabilizer.

3. The stabilizer system as claimed in claim 2, **characterized in that** the metal-containing stabilizer is an organotin stabilizer or a lead stabilizer, a calcium/zinc stabilizer or a barium-zinc stabilizer.

4. The stabilizer system as claimed in claims 1 to 3, **characterized in that** the calcined dolomite is a calcined magnesium dolomite.

5. The stabilizer system as claimed in claims 1 to 4, **characterized in that** the calcined dolomite is calcium magnesium oxide ($MgO{*}CaO$).

6. The stabilizer system as claimed in claims 1 to 5, **characterized in that** the metal perchlorate is sodium perchlorate.

7. The stabilizer system as claimed in claims 1 to 6, **characterized in that** the proportion of the supported calcined dolomite is 0.001 to 30% by weight, based on the total amount of the stabilizer system.

8. A composition comprising a halogenated polymer and a stabilizer system as claimed in any of claims 1 to 7.

9. An article comprising a composition as claimed in claim 8.

10. The use of a stabilizer system as claimed in any of claims 1 to 9 for stabilization of a halogenated polymer.

11. A process for producing a calcined supported dolomite as defined in any of claims 1 to 7, comprising the steps of

(a) providing an at least partly calcined dolomite of the formula

$$Mt^1X^1{*}CaX^2$$

where

$Mt^1$ = Mg or Zn;
$X^1$ = O or $(OH)_2$;
$X^2$ = O; $(OH)_2$ or $CO_3$;

(b) supporting the dolomite with an aqueous metal perchlorate solution, the metal perchlorate having the formula

$$Mt^2(ClO_4)_m{*}nH_2O$$

where $Mt^2$ = Li, Na, K, Mg, Ca, Ba, Zn, Al, La, Ce;
m = 1, 2 or 3, m being selected so as to compensate for the charge of the metal ion $Mt^2$;
n = 0 to 3

(c) optionally drying the supported dolomite.

**12.** The process as claimed in claim 11, wherein the metal perchlorate content of the aqueous solution is 5 to 80% by weight.

**13.** The process as claimed in claim 12, wherein the proportion of the metal perchlorate solution is 1 to 60% by weight, based on the total weight of the supported dolomite.

## Revendications

**1.** Système de stabilisant, contenant un stabilisant thermique et une dolomite fixée sur support, au moins partiellement calcinée, de formule

$$Mt^1X^1.CaX^2$$

où

$Mt^1$ = Mg ou Zn ;
$X^1$ = 0 ou $(OH)_2$ ;
$X^2$ = 0 ; $(OH)_2$ ou $CO_3$,

la dolomite calcinée étant supportée par un perchlorate métallique de formule

$$Mt^2(ClO_4)_m.nH_2O$$

où $Mt^2$ = Li, Na, K, Mg, Ca, Ba, Zn, Al, La, Ce ;
m = 1, 2 ou 3, m étant choisi de manière que la charge de l'ion métallique $Mt^2$ soit compensée ;
n = 0-3

et le système de stabilisant ne contenant aucun des composés choisis dans le groupe constitué par **(B)** et **(C),** lorsque $Mt^1$ est Mg et

**(B)** étant au moins un composé organique azoté choisi dans le groupe constitué par **(B1)** et **(B2), (B1)** étant une tert-alcanolamine et **(B2)** étant une énaminone ou une urée et
(C) étant un aluminohydroxocarbonate de métal alcalino-terreux de formule **(C)**

$$(M_{1-x}Zn_x)_yAl_2(OH)_{4+2y}CO_3.zH_2O \qquad \textbf{(C)}$$

où M = magnésium et/ou calcium ; x = 0 à 0,5 ; y = 2 à 8 et z = 0 à 12.

**2.** Système de stabilisant selon la revendication 1, **caractérisé en ce que** le stabilisant est un stabilisant contenant un métal.

**3.** Système de stabilisant selon la revendication 2, **caractérisé en ce que** le système de stabilisant contenant un métal est un stabilisant organostannique ou un stabilisant contenant du plomb, un stabilisant calcium/zinc ou un stabilisant baryum/zinc.

**4.** Système de stabilisant selon l'une quelconque des revendications 1 à 3, **caractérisé en ce que** la dolomite calcinée est une dolomite de magnésium calcinée.

**5.** Système de stabilisant selon l'une quelconque des revendications 1 à 4, **caractérisé en ce que** la dolomite calcinée est l'oxyde de calcium-magnésium (MgO.CaO).

**6.** Système de stabilisant selon l'une quelconque des revendications 1 à 5, **caractérisé en ce que** le perchlorate métallique est le perchlorate de sodium.

**7.** Système de stabilisant selon l'une quelconque des revendications 1 à 6, **caractérisé en ce que** la proportion de la dolomite calcinée fixée sur support vaut de 0,001 à 30 % en poids, par rapport à la quantité totale du système de stabilisant.

**8.** Compositions contenant un polymère halogéné et un système de stabilisant selon l'une quelconque des revendications 1 à 7.

**9.** Article contenant une composition selon la revendication 8.

**10.** Utilisation d'un système de stabilisant selon l'une quelconque des revendications 1 à 9 pour la stabilisation d'un polymère halogéné.

**11.** Procédé pour la production d'une dolomite fixée sur support, calcinée, telle que définie dans l'une quelconque des revendications 1 à 7, comprenant les étapes

(a) disposition d'une dolomite au moins partiellement calcinée, de formule

$$Mt^1X^1.CaX^2$$

où

$Mt^1$ = Mg ou Zn ;
$X^1$ = O ou $(OH)_2$ ;
$X^2$ = 0 ; $(OH)_2$ ou $CO_3$ ;

(b) fixation de la dolomite sur support à l'aide d'une solution aqueuse de perchlorate métallique, le perchlorate métallique correspondant à la formule

$$Mt^2(ClO_4)_m.nH_2O$$

où $Mt^2$ = Li, Na, K, Mg, Ca, Ba, Zn, Al, La, Ce ;
m = 1, 2 ou 3, m étant choisi de manière que la charge de l'ion métallique $Mt^2$ soit compensée ;
n = 0-3

(c) éventuellement séchage de la dolomite fixée sur support.

**12.** Procédé selon la revendication 11, dans lequel la teneur en perchlorate métallique de la solution aqueuse vaut de 5 à 80 % en poids.

**13.** Procédé selon la revendication 12, dans lequel la proportion de la solution de perchlorate métallique vaut de 1 à 60 % en poids par rapport au poids total de la dolomite fixée sur support.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 212559 A
- US 4861816 A
- EP 457471 A
- EP 768336 A
- WO 02092686 A
- DE 10124734 A
- DE 10255155 A
- WO 2008061664 A
- WO 2008061665 A
- EP 09157705 A
- EP 2072567 A
- EP 313113 A
- WO 9521127 A
- EP 0506831 A1
- US 6531533 B
- US 6096820 A
- US 3501264 A
- US 4221771 A
- EP 0394670 A1
- US 455055284 B
- GB 1694873 A
- EP 1303564 A1
- EP 0930332 A1
- EP 0761756 A1
- EP 0506617 A
- DE 4031818 A1
- EP 0346279 A1
- EP 0307358 A1
- US 4339383 A
- EP 0433230 A
- EP 0734414 A1
- DE 2809492 A1
- EP 0090770 A1
- EP 0573394 A1
- FR 2459816 A
- EP 0090748 A1
- FR 2552440 A
- EP 0365483 A1
- EP 0259783 A1
- WO 0205206 A
- DE 19756913 A1
- DE 19927977 A1
- DE 19927978 A1
- DE 19927979 A1


### In der Beschreibung aufgeführte Nicht-Patentliteratur


- **HANS MOLLET ; ARNOLD GRUBENMANN.** Formulation Technology - Emulsions, Suspensions, Solid Forms. Wiley-VCH, 2001, 190-226
- Ullmanns Enzyklopedia of Industrial Chemistry. 1985, vol. A16, 361 ff
- **E. J. WICKSON.** Handbook of PVC-Formulating. John Wiley & Sons, 1993
- **E. J. WICKSON.** HANDBOOK OF PVC FORMULATING. John Wiley & Sons, 1993, 393-449
- **R. GÄCHTER ; H. MÜLLER.** TASCHENBUCH DER KUNSTSTOFFADDITIVE. Carl Hanser, 1990, 549-615
- **R. GÄCHTER ; H. MÜLLER.** TASCHENBUCH DER KUNSTSTOFFADDITIVE. Carl Hanser Verlag, 1989, 412-415
- **W.V.TITOW.** PVC TECHNOLOGY. Elsevier Publ, 1984, 165-170
- **E. J.WICKSON.** HANDBOOK OF PVC FORMULATING. John Wiley & Sons, 1993
- **R. GÄCHTER ; H. MÜLLER.** HANDBUCH DER KUNSTSTOFFADDITIVE. Carl Hanser Verlag, 1989
- HUNDBUCH DER KUNSTSTOFFADDITIVE. 2001
- **E. J. WICKSON.** HANDBOOK OF POLYVINYL CHLORIDE FORMULATING. J. Wiley & Sons, 1993
- **G. PRITCHARD.** PLASTICS ADDITIVES. Chapman & Hall, 1998
- **J. T. LUTZ ; D. L. DUNKELBERGER.** IMPACT MODIFIERS FOR PVC. John Wiley & Sons, 1992
- **W. BECKER ; H. BRAUN.** Kunststoffhandbuch PVC. Carl Hanser Verlag, 1985, vol. 2/2, 1236-1277